# EUROPÄISCHE PATENTSCHRIFT

(11) **EP 2 285 851 B1**
(45) Veröffentlichungstag und Bekanntmachung des Hinweises auf die Patenterteilung: **19.03.2014**
(21) Anmeldenummer: 09742094.7
(22) Anmeldetag: 06.05.2009
(51) Int. Cl.: C08F 297/08, C10M 107/10, C10M 119/02, C10M 143/08

(54) **ALPHA-OLEFIN/ISOBUTEN-DIBLOCKCOPOLYMERE**
ALPHA-OLEFIN/ISOBUTENE DIBLOCK COPOLYMERS
COPOLYMÈRES BISÉQUENCÉS ALPHA-OLÉFINE/ISOBUTÈNE

(30) Priorität: 07.05.2008 EP 08155831
(43) Veröffentlichungstag der Anmeldung: 23.02.2011
(73) Patentinhaber: BASF SE, 67056 Ludwigshafen (DE)
(72) Erfinder: HANEFELD, Phillip, 69115 Heidelberg (DE); RATH, Hans, Peter, 67269 Grünstadt (DE); MACH, Helmut, 69115 Heidelberg (DE); URBAN, Rainer, 67069 Ludwigshafen (DE)
(86) Internationale Anmeldenummer: PCT/EP2009/055481
(87) Internationale Veröffentlichungsnummer: WO 2009/135876

(56) Entgegenhaltungen:
- EP-A- 1 469 060
- EP-A- 1 816 086
- SUVEGH ET AL: "Effects of the degree of polymerization on the free volume structure of linear amphiphilic poly(isobutylene)-poly(methyl vinyl ether) diblock copolymers" 1. Oktober 2005 (2005-10-01), RADIATION PHYSICS AND CHEMISTRY, ELSEVIER SCIENCE PUBLISHERS BV., AMSTERDAM, NL, PAGE(S) 247 - 251 , XP005039597 ISSN: 0969-806X Zusammenfassung

## Beschreibung

Die vorliegende Erfindung betrifft Diblockcopolymere der Formel A-B, die aufgebaut sind aus einem Polymerblock A, der im Wesentlichen aus α-Olefin-Einheiten mit 6 bis 22 Kohlenstoffatomen aufgebaut ist, und einem Polymerblock B, der im Wesentlichen aus Isobuten-Einheiten aufgebaut ist, ein Verfahren zu ihrer Herstellung, ihre Verwendung in Schmierstoffzusammensetzungen sowie Schmierstoffzusammensetzungen, die solche Diblockcopolymere enthalten.

Die wirtschaftlich bedeutsamsten Schmierstoffzusammensetzungen sind Motorenöle, Getriebeöle, wie Schalt- und Automatikgetriebeöle und Schmierfette. Motorenöle müssen auch bei hohen Temperaturen ausreichend hohe Viskositäten aufweisen, um einen einwandfreien Schmiereffekt und eine gute Abdichtung zwischen Zylinder und Kolben zu gewährleisten. Weiterhin müssen Motorenöle von ihren Fließeigenschaften auch so beschaffen sein, dass bei niedrigen Temperaturen der Motor problemlos gestartet werden kann. Hohe Anforderungen an das Viskositätsverhalten werden selbstredend auch an alle anderen Schmierstoffzusammensetzungstypen gestellt.

Die Viskosität eines Stoffes ist grundsätzlich eine temperaturabhängige Größe, die mit zunehmender Temperatur sinkt und mit sinkender Temperatur steigt. Ein Maß für diese Temperaturabhängigkeit ist der Viskositätsindex (VI): Je höher der Viskositätsindex eines Stoffes ist, desto geringer ist die Temperaturabhängigkeit der Viskosität des jeweiligen Stoffes. Noch vor wenigen Jahren waren aufgrund der niedrigen Viskositätsindices der Motorenöle für Kraftfahrzeuge Winteröle (niedriger Viskosität) und Sommeröle (höherer Viskosität) im Einsatz, was in gemäßigten und kälteren Klimazonen zweimal im Jahr einen Ölwechsel erforderte. Inzwischen erlauben aber Mehrbereichsöle den Betrieb im Winter wie im Sommer. Diese Mehrbereichsöle haben einen hohen Viskositätsindex, der entweder dadurch erreicht wird, dass schon das Grundöl einen hohen VI hat, oder dass dem Öl VI-Verbesserer zugesetzt werden, d.h. Additive, die die Temperaturabhängigkeit der Viskosität der Grundöle verringern. In der Regel wirken die bekannten VI-Verbesserer im Wesentlichen vornehmlich in einer Richtung, d.h. entweder sie wirken dem Viskositätsabfall bei zunehmender Temperatur oder aber der Viskositätszunahme bei sinkender Temperatur entgegen.

Poly-α-olefine (PAO) werden seit längerer Zeit als Komponenten in synthetischen Schmierstoffen eingesetzt. In Motorenölen ersetzen sie teilweise oder ganz mineralische Grundöle und dienen damit selbst als Schmierkomponente, oder sie werden als Additive in teil- oder vollsynthetischen oder in mineralischen Motorenölen eingesetzt. Ihre Aufgabe ist dabei insbesondere, den Viskositätsindex zu verbessern. Während PAO-haltige Öle bei niedrigen Temperaturen in der Regel ein gutes Viskositätsverhalten zeigen, ist ihre Viskosität bei höheren Temperaturen nicht immer zufriedenstellend; d.h. die Viskosität ist zu gering, so dass der Schmierfilm leicht reißt. Außerdem haben sie keine ausreichend verdickenden Eigenschaften und sind somit für den Einsatz in Schmierfetten nicht besonders gut geeignet.

Auch Polyisobutene sind als Komponenten in synthetischen Schmierstoffen bekannt. Polyisobuten-haltige Motorenöle zeigen zwar eine ausreichend verdickende Wirkung und auch ein positives Viskositätsverhalten bei höheren Temperaturen; die Viskosität bei niedrigen Temperaturen ist jedoch nicht zufriedenstellend.

Aufgabe der vorliegenden Erfindung war es, Verbindungen bereitzustellen, welche einer sie enthaltenden Schmierstoffzusammensetzung ein gutes Viskositätsprofil verleihen. Insbesondere sollten sie den Viskositätsindex der Schmierstoffzusammensetzung erhöhen. Vor allem sollten sie nicht nur bei tiefen Temperaturen eine ausreichend geringe, sondern gleichzeitig bei hohen Temperaturen eine ausreichend hohe Viskosität aufweisen. Außerdem sollten sie eine ausreichende Verdickung der Schmierstoffzusammensetzung bewirken.

Die Aufgabe wird gelöst durch ein Diblockcopolymer der Formel

A-B

worin
A für einen Polymerblock A, der im Wesentlichen aus α-Olefin-Einheiten mit 6 bis 22 Kohlenstoffatomen (im α-Olefin) aufgebaut ist, steht; und
B für einen Polymerblock B, der im Wesentlichen aus Isobuten-Einheiten aufgebaut ist, steht.

Der Polymerblock A ist "im Wesentlichen" aus α-Olefin-Einheiten (in einpolymerisierter Form) aufgebaut. "Im Wesentlichen" bedeutet, dass der Polymerblock A, z.B. bedingt durch das technische Herstellungsverfahren, neben den einpolymerisierten α-Olefinen auch untergeordnete Mengen anderer Monomere, die beispielsweise als Verunreinigungen in der Monomerenquelle vorliegen können, einpolymerisiert enthalten kann. Außerdem kann der Polymerblock A, ebenfalls bedingt durch das Herstellungsverfahren, bei der Polymerisation der α-Olefine eingesetzte Regler, Startermoleküle und dergleichen enthalten. Vorzugsweise ist der Polymerblock A zu wenigstens 90 Gew.-%, besonders bevorzugt zu wenigstens 95 Gew.-% und insbesondere zu wenigstens 98 Gew.-%, bezogen auf das Gesamtgewicht des Polymerblocks A, aus einpolymerisierten α-Olefinen aufgebaut.

Der Polymerblock B ist "im Wesentlichen" aus Isobuten-Einheiten (in einpolymerisierter Form) aufgebaut. "Im Wesentlichen" bedeutet, dass der Polymerblock B, z.B. bedingt durch das technische Herstellungsverfahren, neben dem einpolymerisierten Isobuten auch untergeordnete Mengen anderer Monomere, die beispielsweise als Verunreinigungen oder Mischkomponenten in der Monomerenquelle vorliegen können, einpolymerisiert enthalten kann. Außerdem kann der Polymerblock B, ebenfalls bedingt durch das Herstellungsverfahren, bei der Polymerisation des Isobutens eingesetzte Regler, Kettenabbruchsreagenzien und dergleichen enthalten. Vorzugsweise ist der Polymerblock B zu wenigstens 90 Gew.-%, besonders bevorzugt zu wenigstens 95 Gew.-% und insbesondere zu wenigstens 98 Gew.-%, bezogen auf das Gesamtgewicht des Polymerblocks B, aus einpolymerisiertem Isobuten aufgebaut.

Zur Veranschaulichung kann der Polymerblock A vereinfachend auch als ein solcher dargestellt werden, der im Wesentlichen aufgebaut ist aus Wiederholungseinheiten der Formel 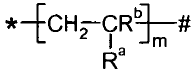 worin
- R^{a}: für C₄-C₂₀-Alkyl steht;
- R^{b}: für Wasserstoff oder C₁-C₄-Alkyl steht; mit der Maßgabe, dass die Reste R^{a} und R^{b} in der Summe 4 bis 20 Kohlenstoffatome enthalten;
- m: für die Anzahl der Wiederholungseinheiten steht; und
eine der Variablen * und # für den Kettenbeginn des Polymerblocks A und die andere für den Übergang zum Polymerblock B steht.

Vorzugsweise steht R^{b} für Wasserstoff oder Methyl und insbesondere für Wasserstoff.

Welche der Variablen * und # für den Kettenbeginn und welche für den Übergang zum Polymerblock B steht, hängt vor allem von den Herstellungsbedingungen des Polymerblocks A ab. In der Regel wird aber * für den Kettenanfang stehen und # für den Übergang zum Polymerblock B. Die Art des Kettenanfangs hängt ebenfalls von den Herstellungsbedingungen des Polymerblocks A ab. Meist wird * aber einfach für H stehen. Der Übergang zum Polymerblock B kann beispielsweise eine Einfachbindung sein; auch die Art der Gruppe # hängt vor allem von den Herstellungsbedingungen des Diblockcoplymers ab.

Zur Veranschaulichung kann der Polymerblock B vereinfachend auch als ein solcher dargestellt werden, der im Wesentlichen aufgebaut ist aus Wiederholungseinheiten der Formel 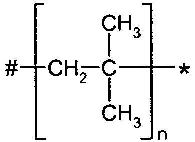 worin
- n: für die Anzahl der Wiederholungseinheiten steht; und
eine der Variablen * und # für das Kettenende des Polymerblocks B und die andere für den Übergang zum Polymerblock A steht.

Zu den Variablen * und # gilt analog das zuvor Gesagte. In diesem Fall steht hier # in der Regel für den Übergang zum Polymerblock A und * für das Kettenende. Die Art des Kettenendes hängt von der Terminierung der Herstellung des Diblockcoplymers ab und ist weiter unten näher erläutert.

Es versteht sich von selbst, dass die obigen Darstellungen nur zur Veranschaulichung herangezogen werden dürfen und dass die tatsächliche Struktur des Diblockcopolymers auch Abweichungen davon aufweisen kann, beispielsweise durch die (an und für sich unerwünschte) Bildung von Seitenketten etc.

Unter α-Olefinen versteht man im Rahmen der vorliegenden Erfindung solche Olefine, die an einem Ende (d.h. in α,β-Position) der längsten Kohlenstoffkette des Moleküls eine olefinische Doppelbindung aufweisen (R^{a}-CR^{b}=CH₂; R^{a} steht für lineares oder verzweigtes C₄-C₂₀-Alkyl und R^{b} steht für Wasserstoff oder lineares oder verzweigtes C₁-C₄-Alkyl, vorzugsweise für Wasserstoff oder Methyl und insbesondere für Wasserstoff).

C₆-C₂₂-α-Olefine sind lineare oder verzweigte Alkene mit 6 bis 22 Kohlenstoffatomen und einer C-C-Doppelbindung an einem Ende (d.h. in α,β-Position) der längsten Kohlenstoffkette des Moleküls. C₆-C₁₈-α-Olefine sind lineare oder verzweigte Alkene mit 6 bis 18 Kohlenstoffatomen und einer C-C-Doppelbindung an einem Ende (d.h. in α,β-Position) der längsten Kohlenstoffkette des Moleküls. C₆-C₁₄-α-Olefine sind lineare oder verzweigte Alkene mit 6 bis 14 Kohlenstoffatomen und einer C-C-Doppelbindung an einem Ende (d.h. in α,β-Position) der längsten Kohlenstoffkette des Moleküls. C₆-C₁₂-α-Olefine sind lineare oder verzweigte Alkene mit 6 bis 12 Kohlenstoffatomen und einer C-C-Doppelbindung an einem Ende (d.h. in α,β-Position) der längsten Kohlenstoffkette des Moleküls. C₈-C₁₂-α-Olefine sind lineare oder verzweigte Alkene mit 8 bis 12 Kohlenstoffatomen und einer C-C-Doppelbindung an einem Ende (d.h. in α,β-Position) der längsten Kohlenstoffkette des Moleküls.

C₆-C₁₀-Alkyl steht für eine lineare oder verzweigte Alkylgruppe mit 6 bis 10 Kohlenstoffatomen. Beispiele hierfür sind Hexyl, Heptyl, Octyl, 2-Ethylhexyl, Nonyl, Decyl, 2-Propylheptyl und die Stellungsisomere davon.C₄-C₁₀-Alkyl steht für eine lineare oder verzweigte Alkylgruppe mit 4 bis 10 Kohlenstoffatomen. Beispiele hierfür sind neben den zuvor bei C₆-C₁₀-Alkyl genannten Resten n-Butyl, sek-Butyl, Isobutyl, tert-Butyl, Pentyl und die Stellungsisomere davon. C₄-C₁₂-Alkyl steht für eine lineare oder verzweigte Alkylgruppe mit 4 bis 12 Kohlenstoffatomen. Beispiele hierfür sind neben den zuvor bei C₆-C₁₀-Alkyl genannten Resten Undecyl, Dodecyl und die Stellungsisomere davon. C₄-C₁₆-Alkyl steht für eine lineare oder verzweigte Alkylgruppe mit 4 bis 16 Kohlenstoffatomen. Beispiele hierfür sind neben den zuvor bei C₄-C₁₂-Alkyl genannten Resten Tridecyl, Tetradecyl, Pentadecyl, Hexadecyl und die Stellungsisomere davon. C₄-C₂₀-Alkyl steht für eine lineare oder verzweigte Alkylgruppe mit 4 bis 20 Kohlenstoffatomen. Beispiele hierfür sind neben den zuvor bei C₂-C₁₆-Alkyl genannten Resten Heptadecyl, Octadecyl, Nonadecyl, Eicosyl und die Stellungsisomere davon.

C₁-C₄-Alkyl steht für eine lineare oder verzweigte Alkylgruppe mit 1 bis 4 Kohlenstoffatomen. Beispiele hierfür sind Methyl, Ethyl, n-Propyl, Isopropyl, n-Butyl, sec-Butyl, Isobutyl und tert-Butyl.

C₁-C₆-Alkyl steht für eine lineare oder verzweigte Alkylgruppe mit 1 bis 6 Kohlenstoffatomen. Beispiele hierfür sind neben zuvor bei C₁-C₄-Alkyl genannten Resten n-Pentyl, 1-Methylbutyl, 2-Methylbutyl, 3-Methylbutyl, 2,2-Dimethylpropyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl und weitere Stellungsisomere davon.

C₁-C₈-Alkyl steht für eine lineare oder verzweigte Alkylgruppe mit 1 bis 8 Kohlenstoffatomen. Beispiele hierfür sind die oben genannten C₁-C₆-Alkylreste und darüber hinaus Heptyl, Octyl und deren Konstitutionsisomere wie 2-Ethylhexyl.

C₁-C₁₀-Alkyl steht für eine lineare oder verzweigte Alkylgruppe mit 1 bis 10 Kohlenstoffatomen. Beispiele hierfür sind die oben genannten C₁-C₈-Alkylreste und darüber hinaus Nonyl, Decyl und deren Konstitutionsisomere.

C₁-C₂₀-Alkyl steht für eine lineare oder verzweigte Alkylgruppe mit 1 bis 20 Kohlenstoffatomen. Beispiele hierfür sind die oben genannten C₁-C₁₀-Alkylreste und darüber hinaus Undecyl, Dodecyl, Tridecyl, Tetradecyl, Pentadecyl, Hexadecyl, Heptadecyl, Octadecyl, Nonadecyl, Eicosyl und deren Konstitutionsisomere.

C₄-C₂₀-Alkyl steht für eine lineare oder verzweigte Alkylgruppe mit 4 bis 20 Kohlenstoffatomen. Beispiele hierfür sind Methyl, Ethyl, n-Propyl, Isopropyl, n-Butyl, sec-Butyl, Isobutyl, tert-Butyl, n-Pentyl, 1-Methylbutyl, 2-Methylbutyl, 3-Methylbutyl, 2,2-Dimethylpropyl, 1-Ethylpropyl, 1,1-Dimethylpropyl, 1,2-Dimethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, Heptyl, Octyl, 2-Ethylhexyl, Nonyl, Decyl, Undecyl, Dodecyl, Tridecyl, Tetradecyl, Pentadecyl, Hexadecyl, Heptadecyl, Octadecyl, Nonadecyl, Eicosyl und deren Konstitutionsisomere.

C₂-C₈-Hydroxyalkyl ist ein linearer oder verzweigter Alkylrest mit 2 bis 8, insbesondere 2 bis 4 Kohlenstoffatomen, worin wenigstens ein, z.B. 1, 2, 3, oder 4 der Wasserstoffatome durch eine Hydroxygruppe ersetzt sind. Beispiele hierfür sind 2-Hydroxy-1-ethyl, 2- und 3-Hydroxy-1-propyl, 2-, 3- und 4-Hydroxy-1-butyl, 2-, 3-, 4- und 5-Hydroxy-1-pentyl, 2-, 3-, 4-, 5- und 6-Hydroxy-1-hexyl, 2-, 3-, 4-, 5-, 6- und 7-Hydroxy-1-heptyl, 2-, 3-, 4-, 5-, 6-, 7- und 8-Hydroxy-1-octyl, 2,3-Dihydroxy-1-propyl und deren Konstitutionsisomere.

Cycloalkyl steht in der Regel für C₃-C₈-Cycloalkyl, d.h. für einen gesättigten Carbocyclus mit 3, 4, 5, 6, 7 oder 8 Kohlenstoffatomen als Ringgliedern, wie Cyclopropyl, Cyclobutyl, Cyclopentyl, Cyclohexyl, Cycloheptyl oder Cyclooctyl. Der Cycloalkylrest kann gegebenenfalls eine oder mehrere C₁-C₁₀-Alkylgruppen als Substituenten aufweisen.

C₃-C₇-Cycloalkyl steht für einen gesättigten Carbocyclus mit 3, 4, 5, 6 oder 7 Kohlenstoffatomen als Ringgliedern, wie beispielsweise Cyclopropyl, Cyclopentyl, Cyclohexyl und Cycloheptyl. C₅-C₇-Cycloalkyl steht für einen gesättigten Carbocyclus mit 5, 6 oder 7 Kohlenstoffatomen als Ringgliedern, wie beispielsweise Cyclopentyl, Cyclohexyl und Cycloheptyl.

Alkylen steht beispielsweise für C₁-C₈-Alkylen, C₂-C₈-Alkylen, C₂-C₆-Alkylen, C₂-C₅-Alkylen oder vorzugsweise C₂-C₄-Alkylen und speziell C₂-C₃-Alkylen.

C₂-C₃-Alkylen ist eine lineare oder verzweigte verbrückende Kohlenwasserstoffgruppe mit 2 oder 3 Kohlenstoffatomen, wie 1,2-Ethylen, 1,2- und 1,3-Propylen. Lineares C₂-C₃-Alkylen ist 1,2-Ethylen oder 1,3-Propylen.

C₂-C₄-Alkylen ist eine lineare oder verzweigte verbrückende Kohlenwasserstoffgruppe mit 2, 3 oder 4 Kohlenstoffatomen, wie 1,2-Ethylen, 1,2- und 1,3-Propylen, 1,2-, 1,3-, 2,3- und 1,4- Butylen, 2,2-Dimethyl-1,2-ethylen, 1,1-Dimethyl-1,2-ethylen und dergleichen.

C₂-C₄-Alkylen ist eine lineare oder verzweigte verbrückende Kohlenwasserstoffgruppe mit 2, 3 oder 4 Kohlenstoffatomen, wie 1,1- und 1,2-Ethylen, 1,1-, 1,2-, 2,2- und 1,3-Propylen, 1,1-, 1,2-, 2,2-, 1,3-, 2,3- und 1,4- Butylen, 2,2-Dimethyl-1,2-ethylen, 1,1-Dimethyl-1,2-ethylen und Konstitutionsisomere davon. Bevorzugt enthält die verbrückende Einheit in C₂-C₄-Alkylen wenigstens zwei Kohlenstoffatome. Somit sind bevorzugte Beispiel für C₂-C₄-Alkylen 1,2-Ethylen, 1,2- und 1,3-Propylen, 1,2-, 1,3-, 2,3- und 1,4- Butylen, 2,2-Dimethyl-1,2-ethylen, 1,1-Dimethyl-1,2-ethylen und dergleichen.

C₂-C₆-Alkylen ist eine lineare oder verzweigte verbrückende Kohlenwasserstoffgruppe mit 2, 3, 4, 5 oder 6 Kohlenstoffatomen, wie 1,1- und 1,2-Ethylen, 1,1-, 1,2-, 2,2- und 1,3-Propylen, 1,1-, 1,2-, 2,2-, 1,3-, 2,3- und 1,4- Butylen, 2,2-Dimethyl-1,2-ethylen, 1,1-Dimethyl-1,2-ethylen, 1,5-Pentylen, 1,6-Hexylen und Konstitutionsisomere davon. Bevorzugt enthält die verbrückende Einheit in C₂-C₆-Alkylen wenigstens zwei Kohlenstoffatome. Somit sind bevorzugte Beispiel für C₂-C₆-Alkylen 1,2-Ethylen, 1,2- und 1,3-Propylen, 1,2-, 1,3-, 2,3- und 1,4- Butylen, 2,2-Dimethyl-1,2-ethylen, 1,1-Dimethyl-1,2-ethylen, 1,5-Pentylen, 1,6-Hexylen und dergleichen.

C₂-C₈-Alkylen ist eine lineare oder verzweigte verbrückende Kohlenwasserstoffgruppe mit 2, 3, 4, 5, 6, 7 oder 8 Kohlenstoffatomen, wie 1,1- und 1,2-Ethylen, 1,1-, 1,2-, 2,2-und 1,3-Propylen, 1,1-, 1,2-, 2,2-, 1,3-, 2,3- und 1,4- Butylen, 2,2-Dimethyl-1,2-ethylen, 1,1-Dimethyl-1,2-ethylen, 1,5-Pentylen, 1,6-Hexylen, 1,7-Heptylen, 1,8-Octylen und Konstitutionsisomere davon. Bevorzugt enthält die verbrückende Einheit in C₂-C₈-Alkylen wenigstens zwei Kohlenstoffatome. Somit sind bevorzugte Beispiel für C₂-C₈-Alkylen 1,2-Ethylen, 1,2- und 1,3-Propylen, 1,2-, 1,3-, 2,3- und 1,4- Butylen, 2,2-Dimethyl-1,2-ethylen, 1,1-Dimethyl-1,2-ethylen, 1,5-Pentylen, 1,6-Hexylen, 1,7-Heptylen, 1,8-Octylen und dergleichen.

C₁-C₈-Alkylen ist eine lineare oder verzweigte verbrückende Kohlenwasserstoffgruppe mit 1, 2, 3, 4, 5, 6, 7 oder 8 Kohlenstoffatomen, wie Methylen, 1,1- und 1,2-Ethylen, 1,1-, 1,2-, 2,2- und 1,3-Propylen, 1,1-, 1,2-, 2,2-, 1,3-, 2,3- und 1,4- Butylen, 2,2-Dimethyl-1,2-ethylen, 1,1-Dimethyl-1,2-ethylen, 1,5-Pentylen, 1,6-Hexylen, 1,7-Heptylen, 1,8-Octylen und Konstitutionsisomere davon. Bevorzugt enthält die verbrückende Einheit in C₂-C₈-Alkylen wenigstens zwei Kohlenstoffatome. Somit sind bevorzugte Beispiel für C₂-C₈-Alkylen 1,2-Ethylen, 1,2- und 1,3-Propylen, 1,2-, 1,3-, 2,3- und 1,4-Butylen, 2,2-Dimethyl-1,2-ethylen, 1,1-Dimethyl-1,2-ethylen, 1,5-Pentylen, 1,6-Hexylen, 1,7-Heptylen, 1,8-Octylen und dergleichen.

Alkyloxy (Alkoxy) steht für einen über ein Sauerstoffatom gebundenen Alkylrest. Dementsprechend stehen Aryloxy, Cycloalkyloxy und Arylalkyloxy für über ein Sauerstoffatom gebundenes Aryl, Cycloalkyl bzw. Arylalkyl.

C₁-C₄-Alkoxy steht für einen wie vorstehend definierten C₁-C₄-Alkylrest, der über ein Sauerstoffatom gebunden ist. Beispiele sind Methoxy, Ethoxy, Propoxy, Isopropoxy, Butoxy, sec-Butoxy, Isobutoxy und tert-Butoxy.

C₁-C₆-Alkoxy steht für einen wie vorstehend definierten C₁-C₆-Alkylrest, der über ein Sauerstoffatom gebunden ist. Beispiele sind neben den zuvor bei C₁-C₄-Alkoxy genannten Resten Pentoxy, Hexoxy und Konstitutionsisomere davon.

C₁-C₈-Alkoxy steht für einen wie vorstehend definierten C₁-C₈-Alkylrest, der über ein Sauerstoffatom gebunden ist. Beispiele sind neben den zuvor bei C₁-C₆-Alkoxy genannten Resten Heptyloxy, Octyloxy und Konstitutionsisomere davon.

C₁-C₁₀-Alkoxy steht für einen wie vorstehend definierten C₁-C₁₀-Alkylrest, der über ein Sauerstoffatom gebunden ist. Beispiele sind neben den zuvor bei C₁-C₈-Alkoxy genannten Resten Nonyloxy, Decyloxy und Konstitutionsisomere davon.

Acyloxy (Alkylcarbonyloxy) steht für einen über Sauerstoff gebundenen Alkylcarbonyl-Rest, der vorzugsweise 1 bis 6 C-Atome im Alkylteil aufweist (= C₁-C₆-Alkylcarbonyloxy). C₁-C₆-Alkylcarbonyloxy steht für einen wie vorstehend definierten C₁-C₆-Alkylrest, der über eine Carbonyoxygruppe (C(O)O) gebunden ist. Beispiele hierfür sind für Acetyloxy, Propionyloxy, Butyroxy, sec-Butyroxy, Isobutyroxy, tert-Butyroxy, Pentylcarbonyloxy, Hexylcarbonyloxy und Konstitutionsisomere davon.

Aryl steht für einen carbocyclischen C₆-C₁₄-aromatischen Rest, wie Phenyl, Naphthyl, Anthracenyl oder Phenanthrenyl, der gegebenenfalls 1 bis 3 Substituenten trägt, die ausgewählt sind unter Halogen, OH, C₁-C₈-Alkoxy, C₁-C₈-Alkyl, Ntro, Cyano und einem Arylrest. Bevorzugt steht Aryl für Phenyl, das wie oben beschrieben substituiert sein kann, und insbesondere für unsubstituiertes Phenyl.

Arylalkyl steht für eine Alkylgruppe, die wenigstens einen Arylrest trägt und steht vorzugsweise für eine C₁-C₂₀-Alkylarylgruppe. Aryl-C₁-C₂₀-alkyl steht für eine C₁-C₂₀-Alkylgruppe, die wenigstens einen Arylrest trägt. Beispiele hierfür sind Benzyl, 1- und 2-Phenylethyl, 1-, 2- und 3-Phenylpropyl, 1-, 2-, 3- und 4-Phenylbutyl, 1-, 2-, 3-, 4- und 5-Phenylpentyl, 1-, 2-, 3-, 4-, 5- und 6-Phenylhexyl, 1-, 2-, 3-, 4-, 5-, 6- und 7-Phenylheptyl, 1-, 2-, 3-, 4-, 5-, 6-, 7- und 8-Phenyloctyl, 1-, 2-, 3-, 4-, 5-, 6-, 7-, 8- und 9-Phenylnonyl, 1-, 2-, 3-, 4-, 5-, 6-, 7-, 8-, 9- und 10-Phenyldecyl, 1-, 2-, 3-, 4-, 5-, 6-, 7-, 8-, 9-, 10 und 11-Phenylundecyl, Phenyldodecyl, Phenyltridecyl, Phenyltetradecyl, Phenylpentadecyl, Phenylhexadecyl, Phenylheptadecyl, Phenyloctadecyl, Phenylnonadecyl undnd Phenyleicosyl und Konstitutionsisomere davon.

C₁-C₁₀-Arylalkyl steht für eine C₁-C₁₀-Alkylgruppe, die wenigstens einen Arylrest trägt. Beispiele hierfür sind Benzyl, 1- und 2-Phenylethyl, 1-, 2- und 3-Phenylpropyl, 1-, 2-, 3-und 4-Phenylbutyl, 1-, 2-, 3-, 4- und 5-Phenylpentyl, 1-, 2-, 3-, 4-, 5- und 6-Phenylhexyl, 1-, 2-, 3-, 4-, 5-, 6- und 7-Phenylheptyl, 1-, 2-, 3-, 4-, 5-, 6-, 7- und 8-Phenyloctyl, 1-, 2-, 3-, 4-, 5-, 6-, 7-, 8- und 9-Phenylnonyl, 1-, 2-, 3-, 4-, 5-, 6-, 7-, 8-, 9- und 10-Phenyldecyl und Konstitutionsisomere davon. C₁-C₄-Arylalkyl steht für eine C₁-C₄-Alkylgruppe, die wenigstens einen Arylrest trägt. Beispiele hierfür sind Benzyl, 1- und 2-Phenylethyl, 1-, 2- und 3-Phenylpropyl sowie 1-, 2-, 3- und 4-Phenylbutyl. Insbesondere steht C₁-C₄-Arylalkyl für Benzyl oder 2-Phenylethyl.

Bevorzugt steht Arylalkyl für Benzyl oder 2-Phenylethyl.

Halogen steht für Fluor, Chlor, Brom oder Iod und insbesondere für Fluor, Chlor oder Brom.

Die nachfolgend gemachten Angaben zu einzelnen bevorzugten Merkmalen des erfindungsgemäßen Diblockcopolymers, seiner Verwendung und des Verfahrens zu seiner Herstellung gelten sowohl allein für sich genommen als auch in jeder möglichen Kombination miteinander.

Die geeignete Anzahl der Wiederholungseinheiten des α-Olefins im Polymerblock A wird unter anderem von der Kettenlänge des α-Olefins bestimmt und ist tendenziell umso geringer je größer die Anzahl der Kohlenstoffatome im α-Olefin ist.

Eine geeignete Anzahl an Wiederholungseinheiten im Polymerblock A ist beispielsweise 2 bis 20 oder 2 bis 15 oder bevorzugt 3 bis 10.

In einer bevorzugten Ausführungsform der Erfindung weist der Polymerblock A 2 bis 10, besonders bevorzugt 3 bis 10, stärker bevorzugt 3 bis 8, noch stärker bevorzugt 3 bis 6 und insbesondere 3 oder 4 Wiederholungseinheiten des α-Olefins auf. Dementsprechend steht m in obiger Formel für eine Zahl von vorzugsweise 2 bis 10, besonders bevorzugt von 3 bis 10, stärker bevorzugt von 3 bis 8, noch stärker bevorzugt von 3 bis 6 und insbesondere für 3 oder 4. Diese Angaben gelten besonders bevorzugt für Polymerblöcke A, die aus α-Olefinen mit 8 bis 14, und insbesondere mit 8 bis 12, z.B. mit 10 Kohlenstoffatomen aufgebaut sind.

Vorzugsweise besitzen die α-Olefine 6 bis 18, besonders bevorzugt 6 bis 16, stärker bevorzugt 6 bis 14 und insbesondere 8 bis 14 Kohlenstoffatome. Speziell besitzen sie 8 bis 12 und noch spezieller 10 Kohlenstoffatome.

Die α-Olefine können linear oder verzweigt sein. Vorzugsweise sind sie linear. Beispiele für lineare C₈-C₁₂-α-Olefine sind 1-Octen, 1-Nonen, 1-Decen, 1-Undecen und 1-Dodecen. Beispiele für lineare C₆-C₁₂-α-Olefine sind 1-Hexen, 1-Hepten, 1-Octen, 1-Nonen, 1-Decen, 1-Undecen und 1-Dodecen. Beispiele für lineare C₆-C₁₄-α-Olefine sind 1-Hexen, 1-Hepten, 1-Octen, 1-Nonen, 1-Decen, 1-Undecen, 1-Dodecen, 1-Tridecen und 1-Tetradecen. Beispiele für lineare C₆-C₁₈-α-Olefine sind 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen und 1-Octadecen. Beispiele für lineare C₆-C₂₂-α-Olefine sind 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1-Octadecen, 1-Nonadecen, 1-Eicosen, 1-Henicosen und 1-Docosen.

Bei den α-Olefinen kann es sich sowohl um ein reines α-Olefin als auch um Gemische verschiedener α-Olefine handeln. In den Gemischen können sich die α-Olefine durch die Anzahl ihrer Kohlenstoffatome unterscheiden oder auch dadurch, dass sie Stellungsisomere zueinander sind (d.h. sich in der Art ihrer Verzweigung unterscheiden).

Speziell handelt es sich bei dem α-Olefin um 1-Decen.

Der Polymerblock B enthält vorzugsweise 2 bis 50, besonders bevorzugt 5 bis 40 und insbesondere 10 bis 40 Isobuten-Wiederholungseinheiten. Dementsprechend steht n in obiger Formel für eine Zahl von vorzugsweise 2 bis 50, besonders bevorzugt 5 bis 40 und insbesondere 10 bis 40.

In einer bevorzugten Ausführungsform der Erfindung weisen wenigstens 60 %, besonders bevorzugt wenigstens 70 % und insbesondere wenigstens 75 % der Diblockcopo-Iymerketten eine terminale olefinisch ungesättigte Doppelbindung auf. Mit anderen Worten enthält das erfindungsgemäße Diblockcopolymer vorzugsweise wenigstens 60 Mol-%, besonders bevorzugt wenigstens 70 Mol-% und insbesondere wenigstens 75 Mol-% terminale olefinisch ungesättigte Doppelbindungen. Diese terminalen Doppelbindungen befinden sich vorzugsweise im Polymerblock B, d.h. der Polymerblock B ist vorzugsweise olefinisch terminiert. Unter einer terminalen olefinisch ungesättigten Doppelbindung versteht man im Rahmen der vorliegenden Erfindung eine Doppelbindung in der Position 1 oder 2 der Polymerhauptkette. Bei Polyisobutenen kann es sich dabei um Vinyl-Doppelbindungen (PAO-PIB-CH=C(CH₃)₂; PAO = Polymerblock A; PIB = Polymerblock B ohne terminale Gruppe) oder um eine Vinyliden-Doppelbindung (= Methyliden-Doppelbindung) (PAO-PIB-C(=CH₂)CH₃) handeln. Vorzugsweise handelt es sich um eine terminale Vinyliden-Doppelbindung.

Dementsprechend betrifft eine besonders bevorzugte Ausführungsform der Erfindung Diblockcopolymere A-B, welche vorzugsweise wenigstens 60 Mol-%, besonders bevorzugt wenigstens 70 Mol-% und insbesondere wenigstens 75 Mol-% terminale olefinisch ungesättigte Doppelbindungen enthalten, wobei sich die terminale olefinisch ungesättigte Doppelbindung im Polymerblock B befindet und wobei es sich bei der terminalen olefinisch ungesättigten Doppelbindung um eine Vinylidengruppe handelt.

In einer alternativ bevorzugten Ausführungsform der Erfindung enthält das erfindungsgemäße Diblockcopolymer im Wesentlichen keine olefinisch ungesättigten Doppelbindungen. "Im Wesentlichen" bedeutet, dass das Diblockcopolymer höchstens 5 Mol-%, bevorzugt höchstens 3 Mol-% und insbesondere höchstens 1 Mol-% olefinisch ungesättigten Doppelbindungen enthält.

Das zahlenmittlere Molekulargewicht Mₙ des erfindungsgemäßen Diblockcopolymers beträgt vorzugsweise 500 bis 10.000, besonders bevorzugt 1000 bis 7000 und insbesondere 1000 bis 5000.

Das gewichtsmittlere Molekulargewicht M_{w} des erfindungsgemäßen Diblockcopolymers beträgt vorzugsweise 500 bis 15.000, besonders bevorzugt 1000 bis 15.000 und insbesondere 1000 bis 10.000.

Vorzugsweise weist das erfindungsgemäße Diblockcopolymer eine relativ enge Molekulargewichtsverteilung auf. Dementsprechend beträgt die Polydispersität (PD = M_{w}/Mₙ) vorzugsweise höchstens 3,0, z.B. 1,05 bis 3,0, besonders bevorzugt höchstens 2,5, z.B. 1,05 bis 2,5, und insbesondere höchstens 2,0, z.B. 1,05 bis 2,0.

Die im Rahmen der vorliegenden Erfindung gemachten Angaben zu zahlen- und gewichtsmittleren Molekulargewichten beziehen sich auf Werte wie sie mittels Gelpermeationschromatographie (GPC) ermittelt werden (Polyisobuten-Standards).

Die erfindungsgemäßen Diblockcopolymere lassen sich durch übliche Verfahren des Standes der Technik zur Blockcopolymerisation herstellen. Hierzu wird beispielsweise erst das Monomer des einen Blocks polymerisiert, und erst wenn dieses Monomer im Wesentlichen aufgebraucht ist, wird das Monomer des zweiten Blocks hinzugefügt. Es ist auch möglich, die Polymerisation des ersten Monomers zu beenden, geeigneterweise natürlich in einer solchen Art, dass es zum Diblockcopolymer weiter umgesetzt werden kann, und gewünschtenfalls zu isolieren und/oder zu reinigen. Dieses "fertige Polymer" kann dann entweder mit dem Monomer des zweiten Blocks in einer Polymerisationsreaktion umgesetzt werde, oder es kann mit einem "fertigen Polymer" des zweiten Polymerblocks zum erfindungsgemäßen Diblockcopolymer gekoppelt werden. Geeignete Kopplungsreagenzien und -methoden sind bekannt und beispielsweise in WO 2004/113402 beschrieben, worauf hiermit in vollem Umfang Bezug genommen wird. Die Kopplungsvariante ist allerdings in der Regel nur für Diblockcopolymere geeignet, die keine terminale Doppelbindung aufweisen sollen.

Bei den oben genannten Verfahren ist es bevorzugt, als ersten Block den Poly-α-Olefinblock A herzustellen.

Ein weiterer Gegenstand der Erfindung betrifft ein Verfahren zur Herstellung von erfindungsgemäßen Diblockcopolymeren, umfassend folgenden Schritt:
(i) Umsetzung eines Halogen-terminierten Oligomers oder Polymers eines C₆-C₂₂-α-Olefins mit Isobuten oder einem Isobuten-haltigen Monomerengemisch in Gegenwart einer Lewissäure.

Bezüglich geeigneter und bevorzugter C₆-C₂₂-α-Olefine wird auf die vorstehenden Ausführungen Bezug genommen. Bezüglich der geeigneten und bevorzugten Anzahl der Wiederholungseinheiten an C₆-C₂₂-α-Olefinen im Halogen-terminierten Oligomer oder Polymer gilt das zum Polymerblock A Gesagte.

Halogen-terminierte Oligomere oder Polymere von C₆-C₂₂-α-Olefinen lassen sich durch Hydrohalogenierung von Oligomeren oder Polymeren von C₆-C₂₂-α-Olefinen, die mit einer C-C-Doppelbindung terminiert sind, leicht herstellen. Oligomere oder Polymere von C₆-C₂₂-α-Olefinen sind entweder kommerziell erhältlich oder können gemäß üblicher Verfahren des Standes der Technik zur Polymerisation von α-Olefinen hergestellt werden. Solche Polymerisationsverfahren sind beispielsweise aus der WO 93/24539, EP-A-613873, WO 96/28486, WO 96/23751 und WO 99/67347 und der darin zitierten Literatur bekannt, worauf hiermit in vollem Umfang Bezug genommen wird. So lassen sich terminal ungesättigte Oligomere oder Polymere von α-Olefinen beispielsweise durch Metallocen-katalysierte Oligomerisation/Polymerisation der entsprechenden α-Olefine herstellen; diese können dann durch Hydrohalogenierung der terminalen Doppelbindung in die Halogen-terminierten Oligomere oder Polymere überführt werden.

Geeignete Reaktionsbedingungen für die Hydrohalogenierung sind beispielsweise in J. March, Advanced Organic Chemistry, 4. Auflage, Verlag John Wiley & Sons, S. 758-759 beschrieben, worauf hiermit in vollem Umfang Bezug genommen wird. Zur Addition von Halogenwasserstoff eignen sich prinzipiell HF, HCl, HBr und HI. Die Addition von HI, HBr und HF kann in der Regel bei Raumtemperatur erfolgen, wohingegen zur Addition von HCl in der Regel erhöhte Temperaturen eingesetzt werden.

Die Addition von Halogenwasserstoffen kann prinzipiell in Abwesenheit oder in Anwesenheit von Initiatoren oder von elektromagnetischer Strahlung erfolgen. Bei der Addition in Abwesenheit von Initiatoren, speziell von Peroxiden, werden in der Regel die Markovnikov-Additionsprodukte erhalten. Unter Zusatz von Peroxiden führt die Addition von HBr in der Regel zu Anti-Markovnikov-Produkten.

Vorzugsweise wird das Oligomer oder Polymer des C₆-C₂₂-α-Olefins hydrochloriert, d.h. mit HCl zum entsprechenden Chlor-terminierten Produkt umgesetzt.

Das zu polymerisierende Isobuten kann sowohl in Form von Isobuten selbst als auch in Form von Isobuten-haltigen C₄-Kohlenwasserstoffgemischen (Isobuten-haltigen Monomerengemischen), d. h. Gemischen, die neben Isobuten weitere Kohlenwasserstoffe mit 4 Kohlenstoffatomen, wie Butan, Isobutan, 1-Buten, 2-Buten und Butadien, enthalten, eingesetzt werden. Beispiele hierfür sind C₄-Raffinate, C₄-Schnitte aus der Isobutan-Dehydrierung, C₄-Schnitte aus Steamcrackern, FCC-Crackern (FCC: Fluid Catalyzed Cracking), insbesondere wenn sie wenigstens teilweise von darin enthaltenem 1,3-Butadien befreit sind. Geeignete C₄-Kohlenwasserstoffgemische enthalten vorzugsweise höchstens 1 Gew.-%, besonders bevorzugt höchstens 0,5 Gew.-%, stärker bevorzugt höchstens 0,2 Gew.-%, insbesondere höchstens 0,05 Gew.-%, speziell höchstens 0,02 Gew.-%, Butadien, bezogen auf das Gesamtgewicht des Gemischs. Bevorzugte Kohlenwasserstoffgemische sind beispielsweise Raffinat I und C₄-Schnitte aus FCC-Crackern oder aus der Isobutan-Dehydrierung. Raffinat I ist ein C₄-Kohlenwasserstoffstrom mit etwa folgender Zusammensetzung: 0-5 % Isobutan; 4-12 % n-Butan; 35-55 % Isobuten; 15-55 % 1-Buten; 10-25 % 2-Buten und 0-0,5 % 1,3-Butadien. C₄-Schnitte aus FCC-Crackern weisen in etwa folgende Zusammensetzung auf: 5-15 % n-Butan, 15-25 % Isobutan, 14-18 % Isobuten, 15-25 % trans-But-2-en, 10-20 % cis-But-2-en und 10-20 % 1-Buten. C₄-Schnitte aus der Isobutan-Dehydrierung weisen in etwa folgende Zusammensetzung auf: 45-55 % Isobuten, 40-50 % Butane und 2-10 % 1- und 2-Butene.

Vorzugsweise verwendet man jedoch Isobuten selbst, d.h. Isobuten in einer Reinheit von wenigstens 90 Gew.-%, vorzugsweise von wenigstens 95 Gew.-% und insbesondere von wenigstens 98 Gew.-%.

Als Lewis-Säure kommen kovalente Metallhalogenide und Halbmetallhalogenide, die eine Elektronenpaarlücke aufweisen, in Betracht. Derartige Verbindungen sind dem Fachmann bekannt, beispielsweise aus J.P. Kennedy et al. in US 4,946,889, US 4,327,201, US 5,169,914, EP-A-206 756, EP-A-265 053 sowie umfassend in J.P. Kennedy, B. Ivan, "Designed Polymers by Carbocationic Macromolecular Engineering", Oxford University Press, New York, 1991. Sie sind in der Regel ausgewählt unter Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumdichloride und die Dialkylaluminiumchloride. Bevorzugte Lewis-Säuren sind Titantetrachlorid, Bortrichlorid, Bortrifluorid, Zinntetrachlorid, Aluminiumtrichlorid, Vanadiumpentachlorid, Eisentrichlorid, Alkylaluminiumdichloride und Dialkylaluminiumchloride. Besonders bevorzugte Lewis-Säuren sind Titantetrachlorid, Bortrichlorid und Ethylaluminiumdichlorid und insbesondere Titantetrachlorid. Alternativ kann auch ein Gemisch aus wenigstens zwei Lewis-Säuren eingesetzt werden, beispielsweise Bortrichlorid im Gemisch mit Titantetrachlorid.

Es hat sich bewährt, die Umsetzung gemäß (i) in Gegenwart eines Elektronendonors durchzuführen. Als Elektronendonoren kommen aprotische organische Verbindungen in Betracht, die ein an einem Stickstoff, Sauerstoff oder Schwefelatom befindliches freies Elektronenpaar aufweisen. Bevorzugte Donorverbindungen sind ausgewählt unter Pyridinen wie Pyridin selbst, 2,6-Dimethylpyridin, sowie sterisch gehinderten Pyridinen wie 2,6-Diisopropylpyridin und 2,6-Di-tert-butylpyridin; Amiden, insbesondere N,N-Dialkylamiden von aliphatischen oder aromatischen Carbonsäuren wie N,N-Dimethylacetamid; Lactamen, insbesondere N-Alkyllactamen wie N-Methylpyrrolidon; Ethern, z. B. Dialkylethern wie Diethylether und Diisopropylether, cyclischen Ethem, wie Tetrahydrofuran; Aminen, insbesondere Trialkylaminen wie Triethylamin; Estern, insbesondere C₁-C₄-Alkylestern aliphatischer C₁-C₆-Carbonsäuren wie Ethylacetat; Thioethern, insbesondere Dialkylthioethern oder Alkylarylthioethern, wie Methylphenylsulfid; Sulfoxiden, insbesondere Dialkylsulfoxiden, wie Dimethylsulfoxid; Nitrilen, insbesondere Alkylnitrilen wie Acetonitril und Propionitril; Phosphinen, insbesondere Trialkylphosphinen oder Triarylphosphinen, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen.

Insbesondere sind die Donorverbindungen ausgewählt unter nicht polymerisierbaren, aprotischen siliziumorganischen Verbindungen, die wenigstens einen über Sauerstoff gebundenen organischen Rest aufweisen. Beispiele für derartige Reste sind Alkyloxy, Cycloalkyloxy, Aryloxy, Arylalkyloxy und Acyloxy (Alkylcarbonyloxy).

Die siliziumorganischen Verbindungen können ein oder mehrere, z. B. 2 oder 3, Siliziumatome mit wenigstens einem über Sauerstoff gebundenen organischen Rest aufweisen. Bevorzugt sind solche siliziumorganischen Verbindungen, die einen, zwei oder drei, und insbesondere 2 oder 3 über Sauerstoff gebundene organische Reste je Siliziumatom aufweisen.

Bevorzugte derartige siliziumorganische Verbindungen sind solche der folgenden allgemeinen Formel:

R^{α}ᵣSi(OR^{β})₄₋ᵣ

worin r für 1, 2 oder 3 steht,
- R^{α}: gleich oder verschieden sein können und unabhängig voneinander C₁-C₂₀-Alkyl, C₃-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{β}: gleich oder verschieden sein können und unabhängig voneinander C₁-C₂₀-Alkyl bedeuten, oder für den Fall, dass r für 1 oder 2 steht, zwei Reste R^{β} gemeinsam für Alkylen stehen können.

In der obigen Formel steht r vorzugsweise für 1 oder 2. R^{α} bedeutet vorzugsweise eine C₁-C₈-Alkylgruppe, und insbesondere eine verzweigte oder über ein sekundäres C-Atom gebundene Alkylgruppe, wie Isopropyl, Isobutyl, sec-Butyl, oder eine 5-, 6-oder 7-gliedrige Cycloalkylgruppe, oder eine Arylgruppe, insbesondere Phenyl. Die Variable R^{β} steht vorzugsweise für eine C₁-C₄-Alkylgruppe oder für einen Phenyl-, Tolyl- oder Benzylrest.

Beispiele für derartige bevorzugte Verbindungen sind Dimethoxydiisopropylsilan, Dimethoxyisobutylisopropylsilan, Dimethoxydiisobutylsilan, Dimethoxydicyclopentylsilan, Dimethoxyisobutyl-2-butylsilan, Diethoxyisobutylisopropylsilan, Triethoxytoluylsilan, Triethoxybenzylsilan und Triethoxyphenylsilan. Besonders bevorzugt hierunter ist Triethoxyphenylsilan.

Die Lewis-Säure und der Elektronendonor werden vorzugsweise in einem Molverhältnis von 20:1 bis 1:20, besonders bevorzugt von 5:1 bis 1:5 und insbesondere von 2:1 bis 1:2 eingesetzt.

In einer weiteren bevorzugten Ausgestaltung des erfindungsgemäßen Verfahrens wird die Umsetzung in Schritt (i) in Gegenwart eines Alkylammoniumhalogenids durchgeführt. Geeignete Alkylammoniumhalogenide sind sowohl Monoalkylammoniumsalze als auch Di-, Tri- oder Tetraalkylammoniumhalogenide. Geeignete Alkylreste sind C₁-C₁₀-Alkylreste, wie Methyl, Ethyl, Propyl, Isopropyl, n-Butyl, sek-Butyl, Isobutyl, tert-Butyl, Pentyl, Hexyl, Heptyl, Octyl, Nonyl und Decyl sowie deren Konstitutionsisomere. Bevorzugte Alkylreste sind C₁-C₆-Alkylreste, wie Methyl, Ethyl, Propyl, Isopropyl, n-Butyl, sek-Butyl, Isobutyl, tert-Butyl, Pentyl, Hexyl sowie deren Konstitutionsisomere. In den Di-, Tri- und Tetraalkylammoniumsalzen können die Alkylreste gleich oder verschieden sein. Bevorzugt sind Tetraalkylammoniumhalogenide, insbesondere solche mit vier gleichen Alkylresten. Geeignete Halogenid-Gegenionen sind Fluorid, Chlorid und Bromid, wobei Chlorid und Bromid bevorzugt sind. Beispiele für geeignete Tetraalkylammoniumhalogenide sind Tetramethylammoniumfluorid, Tetramethylammoniumchlorid, Tetramethylammoniumbromid, Tetraethylammoniumfluorid, Tetraethylammoniumchlorid, Tetraethylammoniumbromid, Tetrapropylammoniumfluorid, Tetrapropylammoniumchlorid, Tetrapropylammoniumbromid, Tetrabutylammoniumfluorid, Tetrabutylammoniumchlorid, Tetrabutylammoniumbromid, Tetrapentylammoniumfluorid, Tetrapentylammoniumchlorid, Tetrapentylammoniumbromid, Tetrahexylammoniumfluorid, Tetrahexylammoniumchlorid und Tetrahexylammoniumbromid.

Die Umsetzung in Schritt (i) kann sowohl absatzweise (diskontinuierlich) als auch in kontinuierlicher Fahrweise durchgeführt werden.

Die Polymerisation wird üblicherweise in einem Lösungsmittel durchgeführt. Als Lösungsmittel kommen alle niedermolekularen, organischen Verbindungen oder deren Gemische in Betracht, die eine geeignete Dielektrizitätskonstante und keine abstrahierbaren Protonen aufweisen und die unter den Polymerisationsbedingungen flüssig sind. Bevorzugte Lösungsmittel sind Kohlenwasserstoffe, z.B. acyclische Kohlenwasserstoffe mit 2 bis 8 und vorzugsweise 3 bis 8 Kohlenstoffatomen wie Ethan, Propan, n-Butan und seine Isomeren, n-Pentan und seine Isomeren, n-Hexan und seine Isomeren, n-Heptan und seine Isomeren, sowie n-Octan und seine Isomeren, cyclische Alkane mit 5 bis 8 Kohlenstoffatomen wie Cyclopentan, Methylcyclopentan, Cyclohexan, Methylcyclohexan, Cycloheptan, acyclische Alkene mit vorzugsweise 2 bis 8 Kohlenstoffatomen wie Ethen, Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie halogenierte Kohlenwasserstoffe, wie halogenierte aliphatische Kohlenwasserstoffe, z.B. wie Chlormethan, Dichlormethan, Trichlormethan, Chlorethan, 1,2-Dichlorethan und 1,1,1-Trichlorethan und 1-Chlorbutan, sowie halogenierte aromatische Kohlenwasserstoffe wie Chlorbenzol und Fluorbenzol. Die als Lösungsmittel verwendeten halogenierten Kohlenwasserstoffe umfassen keine Verbindungen, worin Halogenatome an sekundären oder tertiären Kohlenstoffatomen sitzen.

Besonders bevorzugte Lösungsmittel sind aromatische Kohlenwasserstoffe, wovon Toluol besonders bevorzugt ist. Ebenfalls bevorzugt sind Lösungsmittelgemische, die wenigstens einen halogenierten Kohlenwasserstoff und wenigstens einen aliphatischen oder aromatischen Kohlenwasserstoff umfassen. Insbesondere umfasst das Lösungsmittelgemisch Hexan und ein Chloralkan, das ausgewählt ist unter Chlormethan, Dichlormethan, Trichlormethan, 1-Chlorbutan und Gemischen davon. Das Volumenverhältnis von Kohlenwasserstoff zu halogeniertem Kohlenwasserstoff liegt dabei vorzugsweise im Bereich von 1:10 bis 10:1, besonders bevorzugt im Bereich von 4:1 bis 1:4 und insbesondere im Bereich von 2:1 bis 1:2.

In der Regel wird man Schritt (i) des erfindungsgemäßen Verfahrens bei Temperaturen unterhalb 0°C, z.B. im Bereich von 0 bis -100°C, vorzugsweise im Bereich von -20 bis -80°C, und besonders bevorzugt im Bereich von -30 bis -80°C durchführen. Der Reaktionsdruck ist von untergeordneter Bedeutung.

Die Abführung der Reaktionswärme erfolgt in üblicher Weise, beispielsweise durch Wandkühlung und/oder unter Ausnutzung einer Siedekühlung.

Zum Reaktionsabbruch wird das Polymerisat desaktiviert, beispielsweise durch Zugabe einer protischen Verbindung, insbesondere durch Zugabe von Wasser, Alkoholen wie Methanol, Ethanol, n-Propanol, Isopropanol, n-Butanol, Isobutanol, sec-Butanol oder tert-Butanol, oder deren Mischungen mit Wasser.

Durch das erfindungsgemäße Verfahren erhält man Diblockcopolymere, die am distalen Kettenende des Blocks B (d.h. am Kettenende, das dem Kettenanfang des Blocks B entgegengesetzt ist) einen Terminus mit einer funktionellen Gruppe enthalten. Bei dieser funktionellen Gruppe handelt es sich beispielsweise um eine Gruppe -CH₂-C(CH₃)₂-Halogen. Diese wird meist beim Reaktionsabbruch mit einem protischen Desaktivierungsmittel gebildet. Das Halogenatom in dieser terminalen Gruppe stammt in der Regel von der zur Polymerisation eingesetzten Lewis-Säure; es kann aber auch vom eingesetzten Halogen-terminierten Poly-α-olefin stammen. Vorzugsweise steht Halogen für Chlor. Diese Polymere sind wertvolle Zwischenprodukte für die Herstellung weiterer Diblockcopolymer-Derivate. Als Beispiele für die Derivatisierung seien die Alkylierung von Phenolen und die Eliminierung von Halogenwasserstoff aus der Gruppe -CH₂-C(CH₃)₂-Halogen unter Bildung einer ethylenisch ungesättigten terminalen Gruppe genannt.

Die Überführung der terminalen Gruppe -CH₂-C(CH₃)₂-Halogen in einen ethylenisch ungesättigten Rest (Vinyl- oder vorzugsweise Methyliden-Doppelbindung) kann beispielsweise thermisch, z. B. durch Erwärmen auf eine Temperatur von 70 bis 200 °C, oder durch Behandlung mit einer Base erfolgen. Geeignete Basen sind z.B. Alkalimetallalkoxide, wie Natriummethanolat, Natriumethanolat und Kalium-tert-butanolat, basisches Aluminiumoxid, Alkalimetallhydroxide, wie Natriumhydroxid, und tertiäre Amine, wie Pyridin oder Tributylamin, vgl. Kennedy et al., Polymer Bulletin 1985, 13, 435-439. Bevorzugt wird Natriumethanolat verwendet.

Es ist jedoch auch möglich, am Kettenende ethylenisch terminierte Diblockcopolymere zu erhalten, ohne zuvor de Gruppe -CH₂-C(CH₃)₂-Halogen einzuführen. Hierzu setzt man geeigneterweise das Kettenende des Diblockcopolymers mit einem Terminierungsreagenz um, welches an das Kettenende eine ethylenisch ungesättigte Gruppe anfügt.

Geeignete Terminierungsreagenzien sind beispielsweise Trialkylallylsilanverbindungen, z.B. Trimethylallylsilan. Das Kettenende wird dabei durch Zugabe einer Trialkylallylsilanverbindung terminiert. Die Verwendung der Allylsilane führt zum Abbruch der Polymerisation unter Einführung eines Allylrestes am Polymerkettenende, vgl. EP 264 214.

Ein anderes Beispiel für ein Terminierungsreagenz ist 1,1-Diphenylethylen. Das Kettenende wird dabei durch Zugabe von 1,1-Diphenylethylen und einer Base terminiert, wodurch eine diphenylsubstituierte Doppelbindung am Kettenende eingeführt wird, vgl. J. Feldthusen, B. Iván, A. H. E. Müller und J. Kops, Macromol. Rep. 1995, A32, 639, J. Feldthusen, B. Iván und A. H. E. Müller, Macromolecules 1997, 30, 6989 und Macromolecules 1998, 31, 578, DE-A 19648028 und DE-A 19610350.

Ferner sind konjugierte Diene, z.B. Butadien, als Terminierungsreagenzien geeignet. Hierbei wird das Kettenende mit dem konjugierten Dien umgesetzt und anschließend wie zuvor beschrieben desaktiviert, vgl. DE-A 40 25 961.

Nach der Terminierung (Desaktivierung und/oder Einführung einer ethylenisch ungesättigten terminalen Gruppe) wird in der Regel das Lösungsmittel in geeigneten Aggregaten wie Rotations-, Fallfilm- oder Dünnschichtverdampfern oder durch Entspannung der Reaktionslösung entfernt.

Zur Herstellung von erfindungsgemäßen Diblockcopolymeren, die im Wesentlichen keine olefinisch ungesättigten Doppelbindungen aufweisen, unterwirft man Diblockcopolymere, die ethylenisch ungesättigt terminiert sind, einer üblichen Hydrierung. Geeignete Hydrierungsbedingungen sind beispielsweise in Organikum, 17. Auflage, VEB Deutscher Verlag der Wissenschaften, Berlin, 1988, S. 288 beschrieben, worauf hiermit in vollem Umfang Bezug genommen wird.

So können als Hydrierungskatalysatoren in der Regel alle Katalysatoren des Standes der Technik eingesetzt werden, welche die Hydrierung von Olefinen zu den entsprechenden Alkanen katalysieren. Die Katalysatoren können sowohl in heterogener Phase als auch als Homogenkatalysatoren eingesetzt werden.

Vorzugsweise enthalten die Hydrierungskatalysatoren wenigstens ein Metall der Gruppe VIII. Besonders geeignete Metalle der Gruppe VIII sind ausgewählt unter Ruthenium, Cobalt, Rhodium, Nickel, Palladium und Platin.

Die Metalle können auch als Gemische eingesetzt werden. Außerdem können die Katalysatoren neben den Metallen der Gruppe VIII auch geringe Mengen weiterer Metalle, beispielsweise Metalle der Gruppe Vlla, insbesondere Rhenium, oder Metalle der Gruppe Ib, d. h. Kupfer, Silber oder Gold, enthalten. Besonders bevorzugte Metalle der Gruppe VIII sind Ruthenium, Nickel, Palladium und Platin, insbesondere Ruthenium, Nickel und Palladium, und stärker bevorzugt Ruthenium und Nickel. Speziell enthält der Katalysator Nickel als katalytisch aktive Spezies.

Wird ein Heterogenkatalysator eingesetzt, so liegt dieser geeigneterweise in feinverteilter Form vor. Die feinverteilte Form wird beispielsweise folgendermaßen erreicht:
a) Schwarzkatalysator: Das Metall wird kurz vor der Verwendung als Katalysator aus der Lösung eines seiner Salze reduktiv abgeschieden.
b) Adams-Katalysator: Die Metalloxide, insbesondere die Oxide von Platin und Palladium, werden in situ durch den zur Hydrierung eingesetzten Wasserstoff reduziert.
c) Skelett- oder Raney-Katalysator: Der Katalysator wird als "Metallschwamm" aus einer binären Legierung des Metalls (insbesondere Nickel oder Cobalt) mit Aluminium oder Silicium durch Herauslösen eines Partners mit Säure oder Lauge hergestellt. Reste des ursprünglichen Legierungspartners wirken oft synergistisch.
d) Trägerkatalysator: Schwarzkatalysatoren lassen sich auch auf der Oberfläche einer Trägersubstanz niederschlagen. Geeignete Träger und Trägermaterialien sind nachfolgend beschrieben.

Solche Heterogenkatalysatoren sind in allgemeiner Form beispielsweise im Organikum, 17. Auflage, VEB Deutscher Verlag der Wissenschaften, Berlin, 1988, S. 288 beschrieben.

Je nach Ausgestaltung des Hydrierschrittes kann das Trägermaterial verschiedene Gestalten aufweisen. Wird die Hydrierung in Sumpffahrweise durchgeführt, so wird das Trägermaterial in der Regel in Form eines feinteiligen Pulvers eingesetzt. Wird der Katalysator hingegen in Form eines Festbettkatalysators eingesetzt, so setzt man z.B. Formkörper als Trägermaterial ein. Solche Formkörper können in Gestalt von Kugeln, Tabletten, Zylindern, Hohlzylindern, Raschigringen, Strängen, Sattelkörpern, Sternen, Spiralen usw. mit einer Größe (Abmessung der längsten Ausdehnung) von etwa 1 bis 30 mm vorliegen. Außerdem können die Träger in Form von Monolithen, wie sie z.B. in der DE-A-19642770 beschrieben sind, vorliegen. Des Weiteren können die Träger in Form von Drähten, Blechen, Gittem, Netzen, Geweben und dergleichen eingesetzt werden.

Die Träger können aus metallischem oder nichtmetallischem, porösem oder nichtporösem Material bestehen. Geeignete metallische Materialien sind beispielsweise hochlegierte Edelstähle. Geeignete nichtmetallische Materialien sind beispielsweise mineralische Werkstoffe, z.B. natürliche und synthetische Mineralien, Gläser oder Keramiken, Kunststoffe, z.B. künstliche oder natürliche Polymere, oder eine Kombination aus beiden. Bevorzugte Trägermaterialien sind Kohle, insbesondere Aktivkohle, Siliciumdioxid, insbesondere amorphes Siliciumdioxid, Aluminiumoxid, und außerdem die Sulfate und Carbonate der Erdalkalimetalle, Calciumcarbonat, Calciumsulfat, Magnesiumcarbonat, Magnesiumsulfat, Bariumcarbonat und Bariumsulfat.

Der Katalysator kann durch übliche Verfahren auf den Träger aufgebracht werden, z.B. durch Tränken, Benetzen oder Besprühen des Trägers mit einer Lösung, die den Katalysator oder eine geeignete Vorstufe davon enthält.

Geeignete Träger und Verfahren zum Aufbringen des Katalysators auf diese sind beispielsweise in der DE-A-10128242 beschrieben, auf die hiermit in vollem Umfang Bezug genommen wird.

Auch homogene Hydrierungskatalysatoren können in den Hydrierschritt eingesetzt werden. Beispiele hierfür sind die Nickelkatalysatoren, die in der EP-A-0668257 beschrieben sind. Nachteilig bei einer Verwendung von Homogenkatalysatoren sind jedoch ihre Herstellungskosten und auch die Tatsache, dass sie in der Regel nicht regenerierbar sind. Daher werden in den Hydrierschritt vorzugsweise heterogene Hydrierungskatalysatoren eingesetzt.

Besonders bevorzugt wird das Metall in geträgerter Form oder als Metallschwamm eingesetzt. Beispiele für geträgerte Katalysatoren sind insbesondere Palladium, Nickel oder Ruthenium auf Kohle, insbesondere Aktivkohle, Siliciumdioxid, insbesondere auf amorphem Siliciumdioxid, Bariumcarbonat, Calciumcarbonat, Magnesiumcarbonat oder Aluminiumoxid, wobei die Träger in den oben beschriebenen Formen vorliegen können. Bevorzugte Trägerformen sind die oben beschriebenen Formkörper.

Die metallischen Katalysatoren können auch in Form ihrer Oxide, insbesondere Palladiumoxid, Platinoxid oder Nickeloxid, eingesetzt werden, die dann unter den Hydrierbedingungen zu den entsprechenden Metallen reduziert werden.

Als Metallschwamm wird insbesondere Raney-Nickel eingesetzt.

Die einzusetzende Katalysatormenge hängt unter anderem vom jeweiligen katalytisch aktiven Metall und von dessen Einsatzform ab und kann vom Fachmann im Einzelfall bestimmt werden.

Die Hydrierung erfolgt bei einer Temperatur von vorzugsweise 20 bis 250 °C, besonders bevorzugt von 50 bis 240 °C und insbesondere von 150 bis 220 °C.

Der Reaktionsdruck der Hydrierreaktion liegt vorzugsweise im Bereich von 1 bis 300 bar, besonders bevorzugt von 50 bis 250 bar und insbesondere von 150 bis 230 bar.

Sowohl Reaktionsdruck als auch Reaktionstemperatur hängen unter anderem von der Aktivität und Menge des eingesetzten Hydrierkatalysators ab und können im Einzelfall vom Fachmann bestimmt werden.

Die Überführung der olefinisch terminierten Diblockcopolymere in ihre gesättigten Pendants kann selbstverständlich auch mittels anderer Reduktionsmittel, wie Natriumborhydrid, Natriumhydrid und Lithiumaluminiumhydrid v.a. komplexiert mit Übergangsmetallsalzen, wie FeCl₂ oder CoBr₂ (ansonsten sind die drei genannten Reduktionsmittel gegenüber den olefinischen Doppelbindungen zu inert), Natrium in Ethanol, Trifluoressigsäure in Gegenwart von Triethylsilan, Hydrazin, Hydroxylamin in Ethylacetat oder Hydroxylamin-O-sulfonsäure (NH₂OSO₃H), erfolgen. Die Reduktion mittels dieser und weiterer bekannter Reduktionsmittel kann gemäß allgemeinen Verfahren erfolgen, wie sie beispielsweise in Jerry March, Advanced Organic Chemistry, 3. Auflage, John Wiley & Sons, Kapitel 5-10 und in der darin zitierten Literatur beschrieben sind. Bevorzugt sind jedoch Hydrierungen mit den oben genannten Katalysatoren.

Alternativ kann man zur Herstellung von erfindungsgemäßen Diblockcopolymeren, die keine olefinisch ungesättigten Doppelbindungen aufweisen, Diblockcopolymere, die mit einem Halogenatom terminiert sind, einer Hydrodehalogenierung unterworfen. Hierzu wird das Halogen-terminierte Diblockcopolymer mit einem geeigneten Reduktionsmittel, wie Lithiumaluminiumhydrid oder Magnesium in Gegenwart von sekundären oder tertiären Alkoholen (meist Isopropanol), umgesetzt. Die Reduktion mittels dieser und weiterer bekannter Reduktionsmittel kann gemäß allgemeinen Verfahren erfolgen, wie sie beispielsweise in Jerry March, Advanced Organic Chemistry, 3. Auflage, John Wiley & Sons, Kapitel 0-77 und in der darin zitierten Literatur beschrieben sind.

Die erfindungsgemäßen Diblockcopolymere können unterschiedlichen Verwendungszwecken zu geführt werden. Ein Beispiel ist ihre Verwendung in Schmierstoffzusammensetzungen. Für diese Anwendungsform, und vor allem, wenn die Diblockcopolymere den Hauptbestandteil der Schmierstoffzusammensetzung ausmachen, sind insbesondere Diblockcopolymere geeignet, die im Wesentlichen keine olefinisch ungesättigten Doppelbindungen aufweisen, da diese bei ansonsten gleichen anwendungstechnischen Eigenschaften oxidationsstabiler sind als ihre olefinisch ungesättigten Pendants. Diblockcopolymere mit olefinisch ungesättigten Doppelbindungen in der Polymerkette, insbesondere mit terminal angeordneten Doppelbindungen, stellen hingegen aufgrund der reaktiven Doppelbindung wertvolle Zwischenprodukte für die weitere Umsetzung zu funktionalisierten Diblockcopolymeren dar. Geeignete Funktionalisierungsreaktionen sind alle für olefinisch terminierte Polyisobutene bekannten Funktionalierungsreaktionen, wie sie beispielsweise in der WO 2004/113402 beschrieben sind.

Ein weiterer Gegenstand der Erfindung betrifft die Verwendung von erfindungsgemäßen Diblockcopolymeren in Schmierstoffzusammensetzungen.

Außerdem ist Gegenstand der Erfindung eine Schmierstoffzusammensetzung, enthaltend wenigstens ein erfindungsgemäßes Diblockcopolymer.

Die folgenden Ausführungen beziehen sich sowohl auf die erfindungsgemäße Zusammensetzung als auch auf die erfindungsgemäße Verwendung.

Schmierstoffe dienen als Trennmittel zwischen zwei sich relativ gegeneinander bewegenden Reibpartnem. Die Aufgabe der Schmierstoffe besteht darin, den direkten Kontakt zwischen diesen zu verhindern und dadurch zum einen den Verschleiß herabzusetzen und zum anderen Reibung zu mindern bzw. zu optimieren. Zusätzlich kann der Schmierstoff kühlen (d.h. Reibungswärme abführen), die Reibstelle abdichten, Abriebpartikel von den Reibpartnern und anderen Komponenten fernhalten, Korrosion verhindern oder auch Laufgeräusche verringern. Es gibt feste, konsistente, flüssige und gasförmige Schmierstoffe. Die Auswahl richtet sich nach der konstruktiven Begebenheit, der Materialpaarung, den Umgebungsbedingungen und den Beanspruchungen an der Reibstelle.

Die wirtschaftlich bedeutsamsten Schmierstoffzusammensetzungen sind Motorenöle, Getriebeöle, wie Schalt- und Automatikgetriebeöle, und Schmierfette.

Motorenöle dienen vorrangig zur Schmierung der relativ gegeneinander bewegten Teile in Verbrennungsmotoren. Zusätzlich werden Reibungswärme abgeführt, Verschleißpartikel von der Reibstelle wegtransportiert, Verunreinigungen ausgewaschen und vom Öl in der Schwebe gehalten und Metallteile vor Korrosion geschützt. Motorenöle bestehen üblicherweise aus mineralischen Grundölen, welche überwiegend paraffinische Bestandteile enthalten und durch aufwendige Aufarbeitungs- und Reinigungsprozesse in der Raffinerie hergestellt werden, mit einem Anteil an ca. 2 bis 10 Gew.-% an Additiven (bezogen auf die Wirksubstanz-Gehalte). Für spezielle Anwendungen, beispielsweise Hochtemperatur-Einsätze, können die mineralischen Grundöle teilweise oder vollständig durch synthetische Komponenten wie organische Ester, synthetische Kohlenwasserstoffe wie Olefinoligomere, Poly-α-olefine oder Polyolefine oder HydrocrackÖle ersetzt sein. Motorenöle müssen auch bei hohen Temperaturen ausreichend hohe Viskositäten aufweisen, um einen einwandfreien Schmiereffekt und eine gute Abdichtung zwischen Zylinder und Kolben zu gewährleisten. Weiterhin müssen Motorenöle von ihren Fließeigenschaften auch so beschaffen sein, dass bei niedrigen Temperaturen der Motor problemlos gestartet werden kann. Motorenöle müssen oxidationsstabil sein und dürfen auch unter schweren Arbeitsbedingungen nur geringe Mengen an Zersetzungsprodukten in flüssiger oder fester Form sowie Ablagerungen erzeugen. Motorenöle dispergieren Feststoffe (Dispersant-Verhalten), verhindern Ablagerungen (Detergent-Verhalten), neutralisieren saure Reaktionsprodukte und bilden einen Verschleißschutzfilm auf den Metalloberflächen im Motor aus. Motorenöle werden üblicherweise nach Viskositätsklassen (SAE-Klassen; SAE = Society of Automotive Engineers) charakterisiert.

Getriebeöle, wie Schalt- und Automatiköle, sind bezügliche ihrer Grundkomponenten und Additive ähnlich wie Motorenöle zusammengesetzt. Die Kraftübertragung im Zahnradsystem von Getrieben erfolgt zu einem hohen Anteil durch den Flüssigkeitsdruck im Getriebeöl zwischen den Zähnen. Das Getriebeöl muss demzufolge so beschaffen sein, dass es auf Dauer hohe Drücke aushält, ohne sich zu zersetzen. Neben den Viskositätseigenschaften sind hier Verschleiß, Druckfestigkeit, Reibung, Scherstabilität, Traktion und Einlaufverhalten die entscheidenden Größen.

Schmierfette sind verdickte Schmieröle. Gegenüber den Ölen besitzen sie den Vorteil, dass sie von der Reibstelle nicht weglaufen. Ihr Einsatzgebiet sind beispielsweise Radlager, bewegten Systeme wie ABS, Generatoren, Zündverteiler, Elektromotoren und Kleingetriebemotoren.

Motorenöle, Getriebeöle, wie Schalt- und Automatiköle, und Schmierfette enthalten in der Regel wenigstens eines, meist jedoch einige oder alle der nachfolgend aufgeführten Additive in den hierfür üblichen Mengen (welche in Gew.-%, bezogen auf die Gesamt-Schmierstoffzusammensetzung, in Klammern angegeben sind):
(a) Antioxidantien (0,1 bis 5 %):
   Schwefelverbindungen, z.B. Reaktionsprodukte von Terpenen (α-Pinen), Harzölen oder niedermolekularen Polybutenen mit Schwefel, Dialkylsulfide, Dialkyltrisulfide, Polysulfide, Diarylsulfide, modifizierte Thiole, Mercaptobenzimidazole, Mercaptotriazine, Thiophen-Derivate, Xanthate, Zink-dialkyldithiocarbamate, Thioglykole, Thioaldehyde, Dibenzyldisulfid, Alkylphenolsulfide, Dialkylphenolsulfide oder schwefelhaltige Carbonsäuren
   Phosphorverbindungen, z.B. Triaryl- und Trialkylphosphite, 3,5-di-tert.-butyl-4-hydroxy-benzyl-phosphonsäure-dialkylester oder Phosphonsäure-piperazide
   Schwefel-Phosphor-Verbindungen, z.B. Zink-dialkyldithiophosphate (Metalldialkyl-dithiophosphate wirken in Schmierölen auch als Korrosionsinhibitoren und Hochdruckadditive) oder Reaktionsprodukte von Phosphorpentasulfid mit Terpenen (α-Pinen, Dipenten), Polybutenen, Olefinen oder ungesättigten Estem
   Phenol-Derivate, z.B. sterisch gehinderte Mono-, Bis- oder Trisphenole, sterisch gehinderte mehrkernige Phenole, Polyalkylphenole, 2,6-Di-tert.-butyl-4-methylphenol oder Methylen-4,4' -bis(2,6-di-tert.-butylphenol) (Phenol-Derivate werden oft in Kombination mit Antioxidantien auf Schwefelbasis oder Aminbasis eingesetzt)
   Amine, z.B. Arylamine wie Diphenylamin, Phenyl-α-naphthylamin oder 4,4' - Tetra-methyldiamino-diphenylmethan
   Metalldeaktivatoren im engeren Sinne, z.B. N-Salicyliden-ethylamin, N,N'-Disalicyliden-ethylendiamin, N,N'-Disalicyliden-1,2-propandiamin, Triethylendiamin, Ethylendiamintetraessigsäure, Phosphorsäure, Zitronensäure, Glykolsäure, Lecithin, Thiadiazol, Imidazol oder Pyrazol-Derivate
(b) Viskositätsindex-Verbesserer (0,05 bis 10 %), z.B. Polyisobutene mit einem Molekulargewicht von üblicherweise 10.000 bis 45.000, Polymethacrylate mit einem Molekulargewicht von üblicherweise15.000 bis 100.000, Homo- und Copolymerisate von 1,3-Dienen wie Butadien oder Isopren mit einem Molekulargewicht von üblicherweise 80.000 bis 100.000, 1,3-Dien-Styrol-Copolymerisate mit einem Molekulargewicht von üblicherweise 80.000 bis 100.000, Maleinsäureanydrid-StyrolPolymere in veresterter Form mit einem Molekulargewicht von üblicherweise 60.000 bis 120.000, sternförmige Polymere mit blockförmigem Aufbau durch Einheiten aus konjugierten Dienen und aromatischen Monomeren mit einem Molekulargewicht von üblicherweise 200.000 bis 500.000, Polyalkylstyrole mit einem Molekulargewicht von üblicherweise 80.000 bis 150.000, Polyolefine aus Ethylen und Propylen oder Styrol-Cyclopentadien-Norbornen-Terpolymere mit einem Molekulargewicht von üblicherweise 60.000 bis 140.000
(c) Pour Point Erniedriger (Kaltfließverbesserer) (0,03 bis 1 %), z.B. bicyclische Aromaten wie Naphthalin mit verschiedenen langkettigen Alkylresten, Polymethyacrylate mit 12 bis 18 Kohlenstoffatomen im Alkoholrest, einem Verzweigungsgrad zwischen 10 bis 30 mol-% und einem durchschnittlichen Molekulargewicht von 5.000 bis 500.000, langkettige Alkylphenole und Phthalsäuredialkylarylester oder Copolymere verschiedener Olefine
(d) Detergentien (HD Additive) (0,2 bis 4 %), z.B. Calcium-, Blei-, Zink- und Mangan-Naphthenate, Calcium-Dichlorostearate, Calcium-Phenylstearate, Calcium-Chlorophenylstearate, Sulfonierungsprodukte von Alkylaromaten wie Dodecylbenzol, Petroleumsulfonate, Natrium-, Calcium-, Barium- oder Magnesium-Sulfonate, neutrale, basische und überbasische Sulfonate, Phenate und Carboxylate, Salicylate, Metallsalze von Alkylphenolen und Alkylphenolsulfiden, Phosphate, Thiophosphate oder Alkenylphosphonsäure-Derivate
(e) Aschefreie Dispergatoren (0,5 bis 10 %), z.B. Mannich-Kondensate aus Alkylphenol, Formaldehyd und Polyalkylenpolyaminen, Umsetzungsprodukte von Polyisobutenylsuccinanhydriden mit Polyhydroxy-Verbindungen oder Polyaminen, Copolymerisate von Alkylmethacrylaten mit Diethylaminoethyl-methacrylat, N-Vinylpyrrolidon, N-Vinylpryridin oder 2-Hydroxyethyl-methacrylat oder Vinylacetat-Fumarat-Copolymerisate
(f) Hochdruckadditive (Extreme Pressure Additive; EP-Additive) (0,2 bis 2,5 %), z.B. chlorierte Paraffine mit 40 bis 70 Gew.-% Chlorgehalt, chlorierte Fettsäure (insbesondere mit Trichlormethyl-Endgruppen), Dialkylhydrogenphosphite, Triarylphosphite,
   Arylphosphate wie Trikresylphosphat, Dialkylphosphate, Trialkylphosphate wie Tributylphosphat, Trialkylphosphine, Diphosphorsäureester, Nitroaromaten, Aminophenol-Derivate der Naphthensäure, Carbaminsäureester, Dithiocarbaminsäure-Derivate, substituierte 1,2,3-Triazole, Mischungen aus Benzotriazol und Alkylbernsteinsäureanhydrid oder Alkylmaleinsäureanhydrid, 1,2,4-Thia-diazolPolymere, Morpholinobenzothiadiazol-disulfid, chlorierte Alkylsulfide, sulfurisierte Olefine, sulfurisierte Chlornaphthaline, chlorierte Alkylthiocarbonate, organische Sulfide und Polysulfide wie Bis(4-chlorbenzyl)disulfid und Tetrachlordiphenylsulfid, Trichloracrolein-Mercaptale oder insbesondere Zink-dialkyl-dithiophosphate (ZDDP)
(g) Reibungsverminderer (Friction Modifier) (0,05 bis 1 %), insbesondere polare öllösliche Verbindungen, die eine dünne Schicht auf der Reibungsfläche durch Adsorption erzeugen, z.B. Fettalkohole, Fettamide, Fettsäuresalze, Fettsäurealkylester oder Fettsäureglyceride
(h) Antischaum-Additive (0,0001 bis 0,2 %), z.B. flüssige Silicone wie Polydimethylsiloxane oder Polhethylenglykolether und -sulfide
(i) Demulgatoren (0,1 bis 1 %), z.B. Dinonylnaphthalinsulfonate in Form ihrer Alkaliund Erdalkalimetallsalze
(j) Korrosionsinhibitoren (auch als Metalldeaktivatoren bezeichnet) (0,01 bis 2 %), z.B. tertiäre Amine und ihre Salze, Iminoester, Amidoxime, Diaminomethane, Derivate von gesättigten oder ungesättigten Fettsäuren mit Alkanolaminen, Alkylamine, Sarcosine, Imidazoline, Alkylbenzotriazole, Dimercaptothiadiazol-Derviate, Diarylphosphate, Thiophosphorsäureester, Neutralsalze von primären n-C₈-C₁₈-Alkylaminen oder Cycloalkylaminen mit Dialkylphosphaten mit verzweigten C₅-C₁₂-Alkylgruppen, neutrale oder basische Erdalkalimetallsulfonate, Zinknaphthenate, Mono- und Dialkylarylsulfonate, Barium-dinonylnaphthalinsulfonate, Lanolin (Wollfett), Schwermetallsalze der Naphthensäure, Dicarbonsäure, ungesättigte Fettsäuren, Hydroxyfettsäuren, Fettsäureester, Pentaerythritol- und Sorbitan-Monooleate, O-Stearoylalkanolamine, Polyisobutenylbernsteinsäure-Derivate oder Zink-dialkyldithiophosphate und Zink-dialkyldithiocarbamate
(k) Emulgatoren (0,01 bis 1 %), z.B. langkettige ungesättigte, natürlich vorkommende Carbonsäure, Naphthensäuren, synthetische Carbonsäuren, Sulfonamide, N-Oleylsarcosin, Alkansulfamidoessigsäure, Dodecylbenzolsulfonat, langkettige alkylierte Ammoniumsalze wie Dimethyldodecylbenzylammonium-chlorid, Imidazolinium-Salze, Alkyl-, Alkylaryl-, Acyl-, Alkylamino- und Acylaminopolyglykole oder langkettige acylierte Mono- und Diethanolamine
(l) Farbstoffe und Fluoreszenzadditive (0,001 bis 0,2 %)
(m) Konservierungsmittel (0,001 bis 0,5 %)
(n) Geruchsverbesserer (0,001 bis 0,2 %).
   Insbesondere Schmierfette enthalten darüber hinaus noch
(o) Verdicker, z.B. Metallseifen, Polyharnstoffe, Polyethylen, Bentonit oder Kieselgele.

Die erfindungsgemäßen Diblockcopolymere können einerseits als synthetische Schmierkomponente in den Schmierstoffzusammensetzungen dienen, d.h. die Schmierstoffbasis teilweise oder ganz ersetzen. In diesem Fall enthält eine solche Schmierstoffzusammensetzung die erfindungsgemäßen Diblockcopolymere in nicht unerheblichen Mengen, z.B. in einer Menge von >10 Gew.-%, z.B. >10 bis 50 oder >10 bis 70 oder >10 bis 80 oder >10 bis 90 oder >10 bis 95 oder >10 bis 100 Gew.-%; oder wenigstens 20 Gew.-%, z.B. 20 bis 50 oder 20 bis 70 oder 20 bis 80 oder 20 bis 90 oder 20 bis 95 oder 20 bis 100 Gew.-%; oder wenigstens 30 Gew.-%, z.B. 30 bis 50 oder 30 bis 70 oder 30 bis 80 oder 30 bis 90 oder 30 bis 95 oder 30 bis 100 Gew.-%, bezogen auf das Gesamtgewicht der Schmierstoffzusammensetzung. In diesem Fall, d.h. wenn die erfindungsgemäßen Diblockcopolymere als synthetische Schmierkomponente in den Schmierstoffzusammensetzungen dienen, handelt es sich bei Schmierstoffzusammensetzung vorzugsweise um ein Motorenöl. Dementsprechend ersetzen dann die erfindungsgemäßen Diblockcopolymere teilweise oder vollständig das mineralische, teil- oder vollsynthetische Motorenöl und wirken selbst als Schmierstoff. Eine bevorzugte Ausführungsform der Erfindung betrifft somit die Verwendung der erfindungsgemäßen Diblockcopolymere als synthetische Schmierkomponente in Schmierstoffzusammensetzungen, vorzugsweise in Motorenölen. In diesem Fall handelt es sich bei den erfindungsgemäßen Diblockcopolymeren vorzugsweise um solche, die im Wesentlichen keine olefinisch ungesättigten Doppelbindungen enthalten.

Andererseits können die erfindungsgemäßen Diblockcopolymere den Schmierstoffzusammensetzungen als Additiv zugesetzt werden. Additive verändern die physikalischen und/oder chemischen Eigenschaften von Zusammensetzungen, denen sie zugesetzt werden, ohne in wesentlichen Anteilen in diesen enthalten zu sein. "Ohne in wesentlichen Anteilen enthalten zu sein" bedeutet hier, dass die Zusammensetzung höchstens 10 Gew.-%, z.B. 0,1 bis 10 oder 0,5 bis 10 oder 1 bis 10 Gew.-%, oder höchstens 5 Gew.-%, z.B. 0,1 bis 5 oder 0,5 bis 5 oder 1 bis 5 Gew.-%, bezogen auf das Gesamtgewicht der Schmierstoffzusammensetzung, der erfindungsgemäßen Diblockcopolymere enthält. Werden die erfindungsgemäßen Diblockcopolymere den Schmierstoffzusammensetzungen als Additiv zugesetzt und somit in untergeordneter Menge enthalten, so können auch Diblockcopolymere eingesetzt werden, die olefinisch ungesättigte Doppelbindungen enthalten. Bevorzugt ist jedoch auch hier aus Gründen der Oxidationsstabilität der Einsatz erfindungsgemäßer Diblockcopolymere, die im Wesentlichen keine olefinisch ungesättigten Doppelbindungen enthalten

Insgesamt enthält die erfindungsgemäße Schmierstoffzusammensetzung das wenigstens eine erfindungsgemäße Diblockcopolymer in einer Menge von vorzugsweise 0,1 bis 100 Gew.%, z.B. 0,5 bis 100 Gew.-% oder 1 bis 100 Gew.-%, besonders bevorzugt von 0,1 bis 95 Gew.%, z.B. 0,5 bis 95 Gew.-% oder 1 bis 95 Gew.-%, stärker bevorzugt von 0,1 bis 90 Gew.%, z.B. 0,5 bis 90 Gew.-% oder 1 bis 90 Gew.-%, noch stärker bevorzugt von 0,1 bis 80 Gew.%, z.B. 0,5 bis 80 Gew.-% oder 1 bis 80 Gew.-%, und insbesondere von 0,1 bis 70 Gew.%, z.B. 0,5 bis 70 Gew.-% oder 1 bis 70 Gew.-%, bezogen auf das Gesamtgewicht der Zusammensetzung.

Wenn die erfindungsgemäßen Diblockcopolymere in Mengen von höchstens 10 Gew.-% enthalten sind, kann es sich auch um solche Diblockcopolymere handeln, die eine ethylenisch ungesättigte Doppelbindung enthalten. Vorzugsweise enthalten jedoch auch in diesem Fall aus Gründen der Oxidationsstabilität die Diblockcopolymere im Wesentlichen keine ethylenisch ungesättigten Doppelbindungen.

In einer bevorzugten Ausführungsform der Erfindung dienen die erfindungsgemäßen Diblockcopolymere zur Verbesserung des Viskositätsindex der sie enthaltenden Schmierstoffzusammensetzung.

Die erfindungsgemäßen Diblockcopolymere können somit teilweise oder vollständig die o.g. Komponente (b) in erfindungsgemäßen Schmierstoffzusammensetzungen ersetzen.

Wie bereits ausgeführt, ist der Viskositätsindex (VI) ein Maß für die Temperaturabhängigkeit der kinematische Viskosität eines Stoffes: Die Viskosität ist grundsätzlich eine temperaturabhängige Größe, die mit zunehmender Temperatur sinkt und mit sinkender Temperatur steigt. Je höher der Viskositätsindex eines Stoffes ist, desto geringer ist die Temperaturabhängigkeit der Viskosität des jeweiligen Stoffes, d.h. desto geringer ist seine temperaturbedingte kinematische Viskositätsänderung. Der Viskositätsindex wird für Mineralölprodukte nach ISO 2909 bzw. ASTM D 2270 bestimmt.

Um eine breitere Anwendbarkeit auch bei unterschiedlichen Temperaturen zu gewährleisten, sind Schmierstoffzusammensetzungen mit einem hohen VI erwünscht.

Vorzugsweise handelt es sich bei den Schmierstoffzusammensetzungen um vollsynthetische, teilsynthetische oder mineralische Motorenöle. Unter (voll)synthetischen Motorenölen versteht man solche auf Basis von organischen Estern, synthetischen Kohlenwasserstoffen, Poly-α-olefinen und Polyolefinen (z.B. Polyisobuten). Teilsynthetische Motorenöle sind Mischungen von Mineralölen mit synthetischen Motorenölen, insbesondere mit den oben genannten synthetischen Motorenölen. Unter den voll-, teilsynthetischen und mineralischen Motorenölen sind Mehrbereichs-Motorenöle besonders bevorzugt. Mehrbereichs-Motorenölen sind Motorenöle, die für den Winterund Sommerbetrieb von Motoren gleichermaßen geeignet sind, weil sie sowohl bei tiefen als auch bei hohen Temperaturen eine brauchbare Viskosität besitzen.

Alternativ handelt es sich bei den Schmierstoffzusammensetzungen vorzugsweise um Getriebeöle. Getriebeöle sind vorzugsweise solche für den Automotivbereich, wie z.B. Schalt- und Automatikgetriebeöle.

Alternativ handelt es sich bei den Schmierstoffzusammensetzungen vorzugsweise um Schmierfette.

Die erfindungsgemäßen Diblockcopolymere bewirken ein deutlich günstigeres Fließverhalten bei hohen und vor allem bei tiefen Temperaturen: Bei tiefen Temperaturen, beispielsweise bei 0 bis -30 °C (Inbetriebnahme des Motors bei Frost), bleiben die Motorenöle und Getriebeöle dünnflüssiger, und gleichzeitig bleiben sie bei hohen Temperaturen (Betriebstemperatur des Motors) ausreichend zähflüssig, so dass der Schmierfilm nicht abreißt.

Die genannten Motorenöle können für die verschiedensten Anwendungszwecke eingesetzt werden, insbesondere jedoch als Viertaktmotorenöle in Automobil- und Zweiradmotoren, Lokomotivdieselmotoren, etc.

Ein weiterer Vorteil der erfindungsgemäßen Diblockcopolymere ist ihre hohe Scherstabilität, was insbesondere im Hinblick auf eine Verwendung in Getriebeölen von Bedeutung ist.

Außerdem haben die erfindungsgemäßen Diblockcopolymere eine gute verdickende Wirkung, was vor allem im Hinblick auf den Einsatz in Getriebeölen und insbesondere in Schmierfetten von Vorteil ist.

Dementsprechend betrifft eine weitere bevorzugte Ausführungsform der Erfindung die Verwendung der erfindungsgemäßen Diblockcopolymere als Verdicker in Schmierstoffzusammensetzungen. Verdicker dienen dazu, das Grundöl zu binden und dadurch seine Viskosität zu erhöhen. Schmierstoffzusammensetzungen, in denen die erfindungsgemäßen Diblockcopolymere als Verdicker dienen, sind vorzugsweise ausgewählt unter Motorenölen, Getriebeölen und Schmierfetten und insbesondere unter Schmierfetten. Somit können die erfindungsgemäßen Diblockcopolymere teilweise oder vollständig Komponente (o) ersetzen.

Außer in Schmierstoffzusammensetzungen können die erfindungsgemäßen Diblockcopolymere auch in Hydraulikflüssigkeiten, Bettbahnölen, Kompressorenölen, Umlaufölen, Kalanderölen oder Walzölen zum Einsatz kommen.

Die erfindungsgemäßen Diblockcopolymere verleihen den sie enthaltenden Schmierstoffzusammensetzungen einen hohen VI. Darüber hinaus weisen sie enthaltende Schmierstoffzusammensetzungen aber auch ein günstigeres Viskositätsprofil als vergleichbare Schmierstoffzusammensetzungen des Standes der Technik, denn sie besitzen bei tiefen Temperaturen eine ausreichend niedrige Viskosität, bei hohen Temperaturen aber auch gleichzeitig eine ausreichen hohe Viskosität, so dass ein Abreißen des Schmierfilms verhindert wird. Zudem sind sie sehr wirksame Verdicker, was vor allem für einen Einsatz in Schmierfetten und für die Viskosität von Schmierstoffzusammensetzungen im höheren Temperaturbereich (z.B. 100 °C und höher) von Vorteil ist.

Die Erfindung wird nun durch die folgenden, nichtlimitierenden Beispiele veranschaulicht.

### Beispiele

### 1. Synthesebeispiele

### 1.1 Herstellung von Poly-1-decen-Polyisobuten-Diblockcopolymeren ("PAO-PIB")

### a) Hydrochlorierung von Poly-1-decen

Als Poly-1-decen wurde Durasyn® 266 (von Ineos; Mₙ 530) eingesetzt.

In einem 2 I Kolben mit Trockeneiskühler, Magnetrührer, Kältebad, einem Gaseinleitungsrohr mit Glasfritte und Stickstoffzufuhr wurde Durasyn® 266 (1123 g; 2,12 mol) in 420 g Dichlormethan vorgelegt. Nach Abkühlen des Kolbeninhalts auf -20 °C wurde mit der Einleitung von Chlorwasserstoff begonnen. Während des Einleitens wurde die Temperatur bei -10 bis -20 °C gehalten. Nach 1 h wurde die HCl-Gaseinleitung beendet und das Reaktionsgemisch wurde noch eine Stunde gerührt, wobei die Temperatur auf 11 °C stieg. Nach Zugabe von 1 I Hexan wurde das Gemisch neunmal mit jeweils 1 I Wasser extrahiert, über Natriumsulfat getrocknet, filtriert und von den Lösungsmitteln unter verringertem Druck am Rotationsverdampfer befreit. Man erhielt 1151,1 g eines rötlichen, klaren Rückstands mit einem Chlorgehalt von 1 g / 100 g.

### b) Polymerisation von Isobuten mit Polydecenchlorid

Als Apparatur wurden zwei 2I Vierhalskolben A und B verwendet, die über eine schließbare Verbindung miteinander verbunden waren. Beide Kolben A (Kondensationskolben) und B (Reaktionskolben) waren mit einem Magnetrührer, einem Thermometer, einem Septum, einem Tropftrichter mit Druckausgleich und einem aufgesetztem Trockeneiskühler mit Trockenrohr sowie einem Heiz- und Kühlbad ausgestattet. Im Kondensationskolben A wurden Phenanthrolin, 1-Chlor-n-butan (600 ml) und Hexan (300 ml) vorgelegt. Isobuten (140 ml; 1,55 mol) wurde in den Tropftrichter kondensiert und in den Kolben A entleert. Anschließend wurde das Gemisch bei -50 °C über das Septum mit einer 1,6 M n-Butyllithium-Lösung (10 ml) in Hexan titriert, bis es 5 Minuten zur bleibenden Braunfärbung kam. Dann wurde der Absperrhahn zu Kolben B geöffnet und der Inhalt des Kolbens A wurde unter Erwärmen in Kolben B, in den zuvor Phenyltriethoxysilan (5 ml) und Poly-1-decenchlorid (400 g) aus Beispiel 1.1.a) bei -70 °C vorgelegt worden waren, überführt, wo es am Trockeneiskühler kondensierte. Die Lösung wurde auf -78 °C gekühlt. Anschließend wurde Titantetrachlorid (4 ml; 25 mmol/l) zugegeben. Nach 10 min wurde wieder Titantetrachlorid (2 ml; 12,5 mmol) zugegeben und es wurde noch 110 min bei -77 °C gerührt. Die Polymerisation wurde durch Zugabe von zunächst 50 ml Isopropanol und dann 400 ml Wasser abgebrochen. Das Gemisch wurde mit 1 I Hexan versetzt und dreimal mit jeweils 1 I Wasser und dreimal mit jeweils 0,5 I gesättigter Kochsalzlösung gewaschen. Nach dem Trocknen der organischen Phase über Natriumsulfat und Filtrieren wurden die Lösungsmittel unter verringertem Druck am Rotationsverdampfer entfernt. Man erhielt das Polymerisationsprodukt in Form eines roten, klaren Rückstands (453,6 g). Zur Aufreinigung wurde das Polymerisat mit 3300 g Isopropanol geschüttelt. Die obere Phase wurde abgetrennt und bei verringertem Druck vom Lösungsmittel befreit. Die untere Phase wurde zur Isolierung von weiterem Produkt mit Hexan extrahiert und bei verringertem Druck vom Lösungsmittel befreit. Man erhielt das Produkt in Form eines gelben, leicht trüben Öls.

### c) Dehydrohalogenierung des Polymers

In einem 4 I Kolben mit Ölbad, Kühler und Teflonrührer mit Motor wurde das Produkt aus Beispiel 1.1.b), 1500 g THF und 180 g Kalium-tert-butylat vorgelegt und 93 Stunden auf 65 °C erwärmt. Anschließend wurde das Gemisch zehnmal mit jeweils 1 I gesättigter Kochsalzlösung und dann mit 200 ml Isopropanol gewaschen, über Natriumsulfat getrocknet, filtriert und unter verringertem Druck am Rotationsverdampfer von den Lösungsmitteln befreit. Das dehydrohalogenierte Poly-1-decen-Polyisobuten-Diblockcopolymer wies folgende Eigenschaften auf:
Mₙ: 2349
M_{w}: 4428
PD (M_{w}/Mₙ): 1,9
Chlorgehalt: unterhalb der Nachweisgrenze

### 2. Anwendungstechnische Beispiele

Die Viskosität (bei 100 °C) und der Viskositätsindex (VI) des Diblockcopolymers aus Beispiel 1.1 ("PAO-PIB") wurden bestimmt. Außerdem wurden zum Vergleich die Viskosität (bei 100 °C) und der VI eines kommerziell erhältlichen Poly-1-decens mit einem zahlenmittleren Molekulargewicht Mₙ von 2300 bestimmt.

Die Viskosität wurde gemäß DIN 51562 und der VI gemäß DIN ISO 2909 bestimmt. Die Ergebnisse sind in nachfolgender Tabelle aufgeführt.

**Tabelle**

| Polymer | Viskosität (100 °C) [mm²/s] | VI | Mₙ |
|---|---|---|---|
| PAO-PIB | 788 | 204 | 2349 |
| Poly-1-decen | 93 | 205 | 2300 |

In den anwendungstechnischen Beispielen wurden Polymere mit olefinisch ungesättigten Kettenenden eingesetzt. Bei den entsprechenden hydrierten Produkten würde man jedoch das gleiche Viskositätsverhalten beobachten, denn dieses ist im Wesentlichen unabhängig davon, ob der Kettenterminus gesättigt oder ungesättigt ist.

Wie die Beispiele zeigen, besitzt das erfindungsgemäße Diblockcopolymer eine deutlich höhere Viskosität bei 100 °C als das Poly-α-olefin des Standes der Technik, d.h. die Wahrscheinlichkeit, dass der Schmierfilm reißt, ist bei Schmierstoffzusammensetzungen, die das erfindungsgemäße Diblockcopolymer enthalten, deutlich geringer als bei herkömmlichen Schmierstoffzusammensetzungen auf Basis von Poly-α-olefinen.

## Patentansprüche

1. Diblockcopolymer der Formel
A-B
wobei
A für einen Polymerblock A steht, der im Wesentlichen aus α-Olefin-Einheiten mit 6 bis 22 Kohlenstoffatomen aufgebaut ist; und
B für einen Polymerblock B steht, der im Wesentlichen aus Isobuten-Einheiten aufgebaut ist.

2. Diblockcopolymer nach Anspruch 1, wobei das Diblockcopolymer im Wesentlichen keine olefinisch ungesättigten Doppelbindungen enthält.

3. Diblockcopolymer nach Anspruch 1, worin wenigstens 60 % der Diblockcopolymerketten eine terminale olefinisch ungesättigte Doppelbindung enthalten.

4. Diblockcopolymer nach einem der vorhergehenden Ansprüche, worin der Polymerblock A 2 bis 10 Wiederholungseinheiten des α-Olefins aufweist.

5. Diblockcopolymer nach einem der vorhergehenden Ansprüche, worin das α-Olefin 6 bis 14 Kohlenstoffatome besitzt.

6. Diblockcopolymer nach einem der vorhergehenden Ansprüche, worin der Polymerblock B 2 bis 50 Wiederholungseinheiten des Isobutens aufweist.

7. Verfahren zur Herstellung von Diblockcopolymeren gemäß einem der vorhergehenden Ansprüche, umfassend folgenden Schritt:
(i) Umsetzung eines Halogen-terminierten Oligomers oder Polymers eines C₆-C₂₂-α-Olefins mit Isobuten oder einem Isobuten-haltigen Monomerengemisch in Gegenwart einer Lewissäure.

8. Verfahren nach Anspruch 7, wobei die Umsetzung durch Zusatz einer protischen Verbindung abgebrochen wird.

9. Verfahren nach Anspruch 8, wobei das nach Abbruch der Umsetzung mit einer protischen Verbindung erhaltene Produkt anschließend thermisch oder mit einer Base behandelt wird.

10. Verfahren nach Anspruch 9, wobei man das Reaktionsprodukt anschließend hydriert.

11. Verfahren nach einem der Ansprüche 7 oder 8, wobei man das Reaktionsprodukt anschließend einer Hydrodehalogenierung unterwirft.

12. Verfahren nach Anspruch 7, wobei das bei der Polymerisation von Isobuten oder des Isobuten-haltigen Monomerengemischs gebildete Polymer mit einer Trialkylallylsilanverbindung, einem konjugierten Dien oder 1,1-Diphenylethen zusammen mit einer Base umgesetzt wird.

13. Verwendung von Diblockcopolymeren gemäß einem der Ansprüche 1 bis 6 in Schmierstoffzusammensetzungen.

14. Verwendung nach Anspruch 13, als synthetische Schmierkomponente in Schmierstoffzusammensetzungen.

15. Verwendung nach Anspruch 13, zur Verbesserung des Viskositätsprofils von Schmierstoffzusammensetzungen oder als Verdicker in Schmierstoffzusammensetzungen.

16. Schmierstoffzusammensetzung, enthaltend wenigstens ein Diblockcopolymer gemäß einem der Ansprüche 1 bis 6.

## Claims

1. A diblock copolymer of the formula
A-B
in which
A is a polymer block A which is formed essentially from α-olefin units having from 6 to 22 carbon atoms; and
B is a polymer block B which is formed essentially from isobutene units.

2. A diblock copolymer according to claim 1, which comprises essentially no olefinically unsaturated double bonds.

3. A diblock copolymer according to claim 1, wherein at least 60% of the diblock copolymer chains comprise a terminal olefinically unsaturated double bond.

4. A diblock copolymer according to any one of the preceding claims, in which polymer block A has from 2 to 10 repeat units of the α-olefin.

5. A diblock copolymer according to any one of the preceding claims, in which the α-olefin has from 6 to 14 carbon atoms.

6. A diblock copolymer according to any one of the preceding claims, in which polymer block B has from 2 to 50 repeat units of the isobutene.

7. A process for preparing diblock copolymers according to any one of the preceding claims, comprising the following step:
(i) reacting a halogen-terminated oligomer or polymer of a C₆-C₂₂-α-olefin with isobutene or an isobutene-containing monomer mixture in the presence of a Lewis acid.

8. The process according to claim 7, wherein the reaction is terminated by adding a protic compound.

9. The process according to claim 8, wherein the product obtained after terminating the reaction with a protic compound is subsequently treated thermally or with a base.

10. The process according to claim 9, wherein the reaction product is subsequently hydrogenated.

11. The process according to either of claims 7 and 8, wherein the reaction product is subsequently subjected to a hydrodehalogenation.

12. The process according to claim 7, wherein the polymer formed in the polymerization of isobutene or of the isobutene-containing monomer mixture is reacted with a trialkylallylsilane compound, a conjugated diene or 1,1-diphenylethene together with a base.

13. The use of diblock copolymers according to any one of claims 1 to 6 in lubricant compositions.

14. The use according to claim 13 as a synthetic lubricant component in lubricant compositions.

15. The use according to claim 13 for improving the viscosity profile of lubricant compositions or as a thickener in lubricant compositions.

16. A lubricant composition comprising at least one diblock copolymer according to any one of claims 1 to 6.

## Revendications

1. Copolymère biséquencé de formule
A-B
dans laquelle
A représente une séquence polymère A, qui est essentiellement constituée de motifs α-oléfine ayant de 6 à 22 atomes de carbone ; et
B représente une séquence polymère B, qui est essentiellement constituée de motifs isobutène.

2. Copolymère biséquencé selon la revendication 1, le copolymère biséquencé ne comportant pratiquement pas de doubles liaisons à insaturation oléfinique.

3. Copolymère biséquencé selon la revendication 1, dans lequel au moins 60 % des chaînes du copolymère biséquencé comportent une double liaison terminale à insaturation oléfinique.

4. Copolymère biséquencé selon l'une quelconque des revendications précédentes, dans lequel la séquence polymère A comporte de 2 à 10 motifs répétitifs de l'α-oléfine.

5. Copolymère biséquencé selon l'une quelconque des revendications précédentes, dans lequel l'α-oléfine possède de 6 à 14 atomes de carbone.

6. Copolymère biséquencé selon l'une quelconque des revendications précédentes, dans lequel la séquence polymère B comporte de 2 à 50 motifs répétitifs de l'isobutène.

7. Procédé pour la préparation de copolymères biséquencés selon l'une quelconque des revendications précédentes, comprenant l'étape suivante :
(i) mise en réaction d'un oligomère ou polymère à terminaison halogène d'une α-oléfine en C₆-C₂₂ avec de l'isobutène ou un mélange de monomères contenant de l'isobutène, en présence d'un acide de Lewis.

8. Procédé selon la revendication 7, dans lequel on interrompt la réaction par addition d'un composé protique.

9. Procédé selon la revendication 8, dans lequel le produit obtenu après interruption de la réaction à l'aide d'un composé protique est ensuite traité thermiquement ou par une base.

10. Procédé selon la revendication 9, dans lequel on soumet ensuite le produit de réaction à une hydrogénation.

11. Procédé selon l'une quelconque des revendications 7 et 8, dans lequel on soumet ensuite le produit de réaction à une hydrodéshalogénation.

12. Procédé selon la revendication 7, dans lequel on fait réagir le polymère formé dans la polymérisation de l'isobutène, ou du mélange de monomères contenant de l'isobutène, avec un composé trialkylallylsilane, un diène conjugué ou du 1,1-diphényléthène conjointement avec une base.

13. Utilisation de copolymères biséquencés selon l'une quelconque des revendications 1 à 6, dans des compositions de lubrifiants.

14. Utilisation selon la revendication 13, en tant que composant lubrifiant synthétique dans des compositions de lubrifiants.

15. Utilisation selon la revendication 13, pour l'amélioration du profil de viscosité de compositions de lubrifiants ou comme épaississant dans des compositions de lubrifiants.

16. Composition de lubrifiant, contenant au moins un copolymère biséquencé selon l'une quelconque des revendications 1 à 6.
